(19) Europäisches Patentamt

European Patent Office

Office européen des brevets

(11) **EP 1 694 063 A1**

(12) **EUROPEAN PATENT APPLICATION**
published in accordance with Art. 158(3) EPC

(43) Date of publication:
**23.08.2006 Bulletin 2006/34**

(51) Int Cl.:
*H04N 5/64* (2006.01)   *G02B 27/02* (2006.01)
*A63F 13/08* (2006.01)   *G09B 9/00* (2006.01)

(21) Application number: **04792894.0**

(22) Date of filing: **18.10.2004**

(86) International application number:
**PCT/JP2004/015757**

(87) International publication number:
**WO 2005/050985 (02.06.2005 Gazette 2005/22)**

(84) Designated Contracting States:
**AT BE BG CH CY CZ DE DK EE ES FI FR GB GR
HU IE IT LI LU MC NL PL PT RO SE SI SK TR**

(30) Priority: **21.11.2003 JP 2003392849
27.04.2004 JP 2004130597**

(71) Applicant: **Nishi, Kenji
Yokohama-shi
Kanagawa 235-0022 (JP)**

(72) Inventor: **NISHI, Kenji,
Grandstage-Isogo 407
Kanagawa 235-0022 (JP)**

(74) Representative: **Hengelhaupt, Jürgen et al
Anwaltskanzlei
Gulde Hengelhaupt Ziebig & Schneider
Wallstrasse 58/59
10179 Berlin (DE)**

(54) **IMAGE DISPLAY DEVICE AND SIMULATION APPARATUS**

(57)    Gravity center position GRA of image display device 15 is, in a human state of standing, located in a more backward position compared with eyeball 9 and in a more downward position compared with eyeball 9. In this case, assuming that the rotation axes of the head are the X-axis, the Y-axis, and the Z-axis, the intersection point of these axes is the head's rotational movement center CNT. By this, GRA comes close to CNT, and thus, even when rotational movement of the head occurs around CNT, inertia forces other than moment of inertia are successfully made small. Therefore, the image display device can smoothly follow the movements of human head even if the device is heavy in weight.

Fig. 7A

## Description

TECHNICAL FIELD

The present invention relates to an image display device that is used with it being positioned near to the eyeballs and to a simulation device that uses the image display device.

BACKGROUND ART

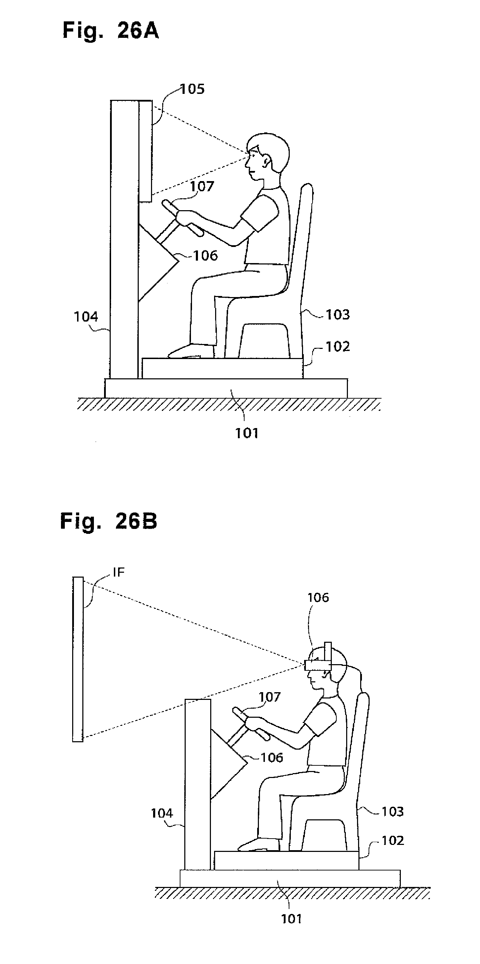

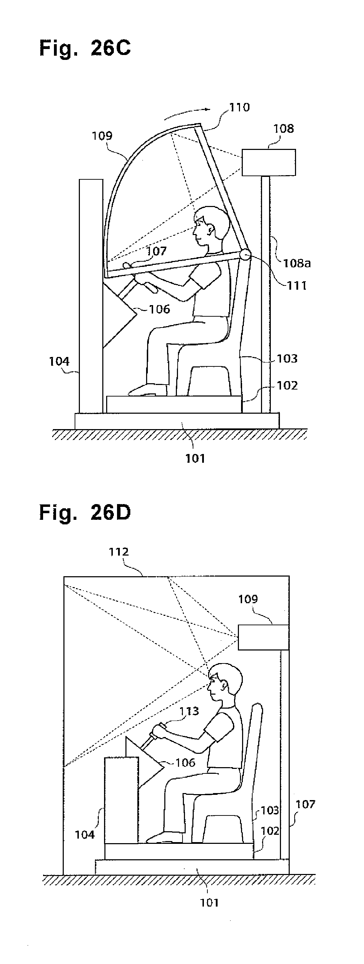

In FIG. 26A is schematically illustrated a typical game machine that is used in, for example, an arcade and that uses an image display device. On supporting base 101 are placed footstool portion 102 and chair 103; on display stand 104 are mounted display panel 106, wheel 107, and display 105.
The user, sitting on the chair, by operating the wheel 107 in hand, etc. while viewing display 105 and display panel 106, manipulates virtual objects displayed on display 105 to amuse himself or herself, for example.
On the other hand, simulation devices that are typically used for training in how to drive an airplane or a vehicle have a similar configuration to that of the game machine; however, many of the simulation devices are configured such that wheel 107 is given a more real structure, and, at the same time, supporting base 101 is capable of actually exerting on the user vibrations and movements to create a sense of reality in synchronization with images displayed on display 105.
With respect to such game machines and simulation devices, there is always a desire to add increased sense of reality and absorption. (It should be noted that since such game machines can be regarded as simulation devices, all of the devices in which virtual spaces are formed by image display devices are sometimes referred to as simulation devices in the present specification and scope of claims. In particular, when relating to the scope of right, such reference applies.) The most straightforward way to achieve the desire is based on trying to increase the sense of reality and absorption by making the image size as viewed by the eyes larger, and to address this way, the size of display 105 has, driven by the related technological development, become increasingly larger year by year to provide images of increasingly higher definition.
It is the head mount display or eyeglass type display as shown in FIG. 26B that was thought to be the most promising candidate as a device for increasing the sense of reality and absorption by making the image size as viewed by the eyes larger. This display is a device in which display 105 constituted by display devices, e.g., liquid crystal devices, is positioned in front of the eyes and which by projecting the images borne by the display as enlarged virtual images by a magnifying optical system, makes the enlarged virtual images look as if they were formed as real images on image plane IF located in a position separated from the display by about 2 m. Note that in FIG. 26B, the same constituent elements as those shown in FIG. 26A are denoted by the same reference numerals (which applies also to FIGS. 26C and 26D, referenced to below). With respect to such devices, a lot of and various kinds of patent applications were filed from about 1993 to about 2001. However, as a matter of fact, while such devices have been commercialized by a few companies, but have not been much adopted as game machines or simulation devices.
The reason for that will be described, referring to FIG. 26B. Head mount displays or eyeglass type displays are manufactured basically with the assumption that they are supported by the head or face, and the weight thereof is designed to be within the range of from 80 to 500 grammes. This weight restriction is imposed based on the fact that when the weight exceeds that limit, the user, wearing such display, feels a big load, the sense of reality and absorption is impaired, and the user can wear the display only for a short time.
However, if the weight restriction of from 80 to 500 grammes is imposed, the magnifying lens system and the liquid crystal devices are restricted in their size; thus, such displays as commercially available are generally destined to be an equivalent type of "52-inch huge-sized screen provided 2 m ahead of the user," i.e., a type of about $\pm 18$ degrees in terms of field of view angle. Moreover, because their resolution is low, the device shown in FIG. 26A, which uses display 105, necessarily represents a picture plane with a larger field of view angle and a higher resolution; and, after all, there cannot be obtained no advantage in using the eyeglass type display and head mount type display as shown in FIG. 26B.
What is often considered, in consideration of the above, in recent years is the method in which images are displayed on the dome shape screen portion as shown in FIG. 26C. The dome shape screen 109 of FIG. 26C is provided with a structure which a user can enter and exit from through the operation of screen supporting portion 110 and rotational movement mechanism 111; by using, e.g., a fish-eye lens, projector 108 placed supporting base 101 displays images on screen 109 surrounding the user. In this case, however, the user is required to focus the user's eyes on screen 109 provided near the user; and thus, although the user can view the images with a large field of view angle, there is still the disadvantage that the sense of reality and absorption is impaired.
Against such background, what is recently paid great attention to are a system in which a dome shape screen with an ample field of view angle is provided in a space such as a movie theater (which system is generally called "I-MAX" and is usually used in a movie theater built in a large-scale amusement park) and a simulation room in which, as shown in FIG. 26D, all of the five-face portion, viewable by a human, on the wall of a box type room of a few-meter dimensions is made screen portion 112 and in which a control mechanism capable of displaying a continuous image on screen portion 112 by use of a few projectors 109 is introduced. In this simulation room, a user, sitting in a position where the user does not interfere with the light beams for forming the images, can perform such a simulation as if the user is moving in the virtual images on screen portion 112, and the simulation room is often used by a research institute.

However, although I-MAX provides a considerable effect in that the user can enjoy the sense of reality and absorption, it requires a big space and entails high equipment costs. Furthermore, when the user turns his face in the right or left direction, the user is to see the auditorium because there is no images in the right and left directions, and thus the user cannot get away from the reality that the user is in a movie theater. In addition, since the I-MAX facility is large, it is suitable for a game machine for multiple users to appreciate images, but is unsuitable for a game machine to be operated by an individual.

On the other hand, similarly to the I-MAX system, with respect to a device as shown in FIG. 26D, a large space and high equipment costs are required, and, further, as described above, the sense of reality and absorption is impaired in the respect that the user has to focus the user's eyes on images located a few meters ahead of the user, and, still further, there are the following problems.

More specifically, human eyes are, when in "a state of blank," focused so that the eyes see images located at infinity; and because the human ignores the movement of objects, the human can easily relax. However, with respect to a device as shown in FIG. 26D, in the case where the user's eyes are focused the images located a few meters ahead of the user, the user's brain is operating so that the user's eyes are focused on a given object seen there, and the eyes are to spontaneously follow the movement of the object. When the eyes spontaneously follow the movement of the object while, as an image, a remote image located nearly at infinity is displayed, VE sickness is caused, and the user gets sick.

Furthermore, in such a system, it is required that the front image that can be seen most clearly in respect of resolution and distortion is brought to the center of the field of view, and thus, when changing the viewing direction, the user has to operate the system using, e.g., a joystick so that the advancing direction coincides with the front image. Besides, since almost all of the space has already been utilized as the space for the screen for display and as the space for transmitting the light beams from the projectors, there is, for example, the disadvantage that equipment for giving a sense of reality felt by other sense organs than the eyes is hard to place.

In sum, the four types (the systems shown in FIGS. 26B, 26C, and 26D, and I-MAX) that are regarded as improved systems for obtaining increased sense of reality and absorption compared with the above-described prior art device shown in FIG. 26A have each the disadvantages described above and are not able to provide such effects that can be said to supersede the display upsizing measures of FIG. 26A.

As a method to solve such problems, Japanese Unexamined Patent Publication Hei 6-195440 (Patent Literature No. 1) discloses an image display device system in which while an eyeglass type display is used, the display is not mounted on its user's head but on a portion other than the user; the display is used in a state that it is in contact the user's face; and the position and posture of the display is controlled in accordance with the movement of the user's face.

In this image display device system, the eyeglass type display is mounted on a 7-axis robot; the relative positional relationship between the eyeglass type display and the user's face is detected by a sensor; and with the 7-axis robot being controlled in accordance with the outputs from the sensor, the movement of the eyeglass type display is made to follow the movement of the user's face. In accordance with this system, the eyeglass type display is allowed to be heavier, and thus, by devising the optical system of the display, images with a large field of view angle can be formed, a sense of reality and absorption can be added, and the mechanical interference between the equipment operated by the user and the position of the eyeglass type display can be avoided.

DISCLOSURE OF THE INVENTION

Japanese Unexamined Patent Publication Hei 6-195440

Japanese Unexamined Patent Publication Hei 7-128612

Problem to be Solved by the Invention

However, with respect to such a devise as disclosed in the above-described Patent Literature No. 1, since a 7-axis robot is used, there are not only the problem that the device becomes an expensive one, but also the problem that, in fact, the relative positional relationship between the eyeglass type display and the user's face cannot be accurately detected. When the relative positional relationship between the eyeglass type display and the user's face cannot be accurately detected, the eyeglass type display cannot be made to accurately follow the movement of the user's face, and thus there arises the problem that the display may give a sense of being pressed or an impact on the user's face.

Further, it may also be conceived that by using, e.g., a counterweight, the apparent weight of an eyeglass type display supported by a supporting mechanism is made to be nearly zero; however, when a user moves his or her head, an inertia force is generated on the eyeglass type display, which inevitably gives a sense of being pressed on the user's face.

DISCLOSURE OF THE INVENTION

The present invention has been made in consideration of such situations, and its object is to provide an image display device that while it is heavy in weight, is capable of following the movement of the head of a human without a sense of being resisted; further, with thus a heavy image display device being able to be implemented, to provide an image display device that has a large field of vision angle comparable to the field of vision actually viewed by a human; in addition, to provide an image display device that is space-saving, can be commercialized at a low price, and also, by giving a sense of reality and absorption to sense organs other than the visual and auditory organs, takes care of VE sickness, etc.; and, still further, to provide a simulation device that uses such image display device.

A first invention to achieve the above-described object is an image display device that with it being supported by a portion other than a user, is in contact with the face of the user and is movable in accordance with the movement of the face of the user, said image display device being characterized in that the gravity center of the image display device is, when it is worn by the user, located on the nearer side of the occipital region compared with the eyeballs and on the nearer side of the neck compared with the eyeballs.

In this invention, because the image display device, while it is used in a state that it is in contact with the face of the user, is supported by a portion other than the user, the image display device does not give a sense of weight to the user. Thus, because the image display device may be made heavy in weight, such an optical system that forms images having a wide field of view angle can be used, which gives a sense of reality and absorption to the user.

Further, because the gravity center of the image display device is, when it is worn by the user, located on the nearer side of the occipital region compared with the eyeballs and on the nearer side of the neck compared with the eyeballs, the gravity center position comes to be located near to the rotational movement center when the user moves his or her face. Accordingly, the inertia force and the centrifugal force that arise and act in the case where the rotational movement center when the user moves his or her face and the gravity center of the image display device are apart from each other become smaller; and thus, the resistance force that is felt when the user moves his or her head becomes to be substantially constituted only by the moment of inertia that arises when the user moves his or her head. Thus, even if the image display device is made heavy in weight, the sense of being pressed associated with the movement of the face can be made small. As a result, the sense of wearing the image display device can be alleviated, which increases the sense of reality and absorption, and the effect of reducing VE sickness can also be expected.

A second invention to achieve the above-described object is the above-described first invention, characterized in that the above-mentioned gravity center of the image display device substantially coincides with the average, 3-axes' rotational movement center of the neck of a human who is supposed to use the image display device.

In this invention, because the gravity center of the image display device substantially coincides with the average, 3-axes' rotational movement center of the neck of a human who is supposed to use the image display device, the inertia force and the centrifugal force that arise and act in the case where the rotational movement center when the user moves his or her face and the gravity center of the image display device are apart from each other become smaller; and thus, the resistance force that is felt when the user moves his or her head becomes to be substantially constituted only by the moment of inertia that arises when the user moves his or her head. Thus, even if the image display device is made heavy in weight, the sense of being pressed associated with the movement of the face can be made small, and thus the above-described operation/working-effect of the first invention can be further enhanced. It is to be noted that while the phrase "substantially coincides with the average, 3-axes' rotational movement center of the neck of a human" means that the coincidence degree suffices when the inertia forces other than the moment of inertia can be neglected practically, it can typically be conceived the case where the gravity center is within the region of the human neck.

A third invention to achieve the above-described object is an image display device that with it, by a portion other than a user, being supported so that the image display device is movable in the three-dimensional directions in space and being supported so that the image display device is rotationally movable in the three-dimensional directions, is in contact with the face of the user and is movable and rotationally movable in accordance with the movement of the face of the user, said image display device being characterized in that it has a plurality of rotational movement shafts of the image display device and in that each of the rotational movement shafts passes through the vicinity of the gravity center of the image display device.

In this invention, because the rotational movement shafts of the image display device pass through the vicinity of the gravity center of the image display device, the inertia force and the centrifugal force that arise and act in the case where the rotational movement center and the gravity center of the image display device are apart from each other become smaller when the position of the image display device is changed by the rotational movement; and thus, the resistance force associated with the positional change of the image display device becomes to be substantially constituted only by a force due to moment of inertia. Accordingly, because other inertia forces do not exist, the image display device becomes to be easily moved. It is to be noted that the phrase "the rotational movement shafts pass through the vicinity of the gravity center" does not necessarily means that the rotational movement shafts, as real objects, pass through the vicinity, but includes the case where the extended lines of the rotational movement shafts, as real objects, pass through the vicinity as well. In addition, the phrase "pass through the vicinity" means that the inertia force and the centrifugal force that arise and act in the case where the rotational movement center and the gravity center of the image display device are apart from each are generated only to the extent that they can be neglected when using the image display device.

A fourth invention to achieve the above-described object is an image display device according to the above-described first or second invention that with it, by a portion other than a user, being supported so that the image display device is movable in the three-dimensional directions in space and being supported so that the image display device is rotationally movable in the three-dimensional directions, is in contact with the face of the user and is movable and rotationally movable in accordance with the movement of the face of the user, said image display device being characterized in that each of the rotational movement shafts of the image display device passes through the vicinity of the gravity center of the image display device.

In this invention, the operation/working-effect of the first or second invention and the operation/working-effect of the third invention can be produced at once. It is to be noted that the phrase "the rotational movement shafts pass through the vicinity of the gravity center" does not necessarily means that the rotational movement shafts, as real objects, pass through the vicinity, but includes the case where the extended lines of the rotational movement shafts, as real objects, pass through the vicinity as well. In addition, the phrase "pass through the vicinity" means that the inertia force and the centrifugal force that arise and act in the case where the rotational movement center and the gravity center of the image display device are apart from each are generated only to the extent that they can be neglected when using the image display device. As a result, this typically means that the rotational movement shafts are within the region of the neck of a human who is supposed to use the image display device.

A fifth invention to achieve the above-described object is the above-described third or fourth invention, characterized in that to each of said rotational movement shafts is set a rotational movement amount measuring sensor and in that said image display device has a computing device that determines the output image of said image display device in accordance with the outputs from the rotational movement amount measuring sensors.

In this invention, because the image display device has the computing device that determines the output image of the image display device in accordance with the outputs from the rotational movement amount measuring sensors, the image to be displayed by the image display device when the user moves his or her head can be made, in response to the head movement, to be an image as actually viewed by the user in the user's sight line direction, which enables to give the sense of reality and absorption.

A sixth invention to achieve the above-described object is any one of the above-described first to fifth inventions, characterized in that said image display device is connected by a string-like flexible member with a counterweight and in that by suspending, via pulleys set on a two-dimensional-direction driving mechanism movable on a horizontal flat surface supported by the floor, said image display device and counterweight, said string-like flexible member supports said image display device.

In this invention, because the counterweight and the image display device are connected by the string-like flexible member and are supported by the pulley, the weight of the image display device is cancelled out by the counterweight. Because the user does not thus feel the weight of the image display device, the sense of wearing the image display device can be alleviated even when the image display device is made heavy in weight.

A seventh invention to achieve the above-described object is any one of the above-described first to sixth inventions, characterized in that said image display device is, via right and left sandwiching means for sandwiching the face from the side face directions that function also as earphones, in contact with the face of a user and in that the positional relationship between the face and the image display device is substantially fixed by said sandwiching means.

In this invention, because the image display device is, via right and left sandwiching means for sandwiching the face from the side face directions that function also as earphones, in contact with the face of a user and because the positional relationship between the face and the image display device is substantially fixed by said sandwiching means, the image display device can be fixed on the face with a broad and soft force; and thus the user does not feel pain at the points of contact, and the fixation can be made in an exhilarating condition.

An eighth invention to achieve the above-described object is any one of the above-described first to seventh inventions, characterized in that said image display device has a function of projecting and imaging, via a relay optical system, a light emitted from a two-dimensional type image forming device onto the retinas in the right and left eyeballs, with the imaged image being a wide range image having a field of view angle of $\pm 22.5$ degrees or more.

In this invention, because the light emitted from the two-dimensional type image forming device is projected and imaged, via the relay optical system, onto the retinas in the right and left eyeballs, with the imaged image being a wide range image having a field of view angle of $\pm 22.5$ degrees or more, the image from the two-dimensional type image forming device can be formed in the full field of view angle as actually viewed by human eyes, which enhances the sense of reality and absorption.

A ninth invention to achieve the above-described object is any one of the above-described first to eighth inventions, characterized in that said image display device has a two-dimensional type image forming device, first (for the right eye use) and second (for the left eye use) light diffusing bodies, first (for the right eye use) and second (for the left eye use) relay optical systems that respectively relay a light emitted from said two-dimensional type image forming device to the first (for the right eye use) and second (for the left eye use) light diffusing bodies, and first (for the right eye use) and second (for the left eye use) eyepiece optical systems that respectively project and image a first transmitted image and a second transmitted image having transmitted through the light diffusing bodies onto each of the retinas in the right and left eyeballs.

In this invention, it is configured such that the light from the two-dimensional type image forming device is, via the relay optical systems, imaged temporarily onto the light diffusing bodies, and the diffused lights from the light diffusing bodies are, via the eyepiece optical systems, imaged on the retinas. Thus, as will be described later in the best mode for carrying out the invention section, this configuration can address even the case where the telecentricity of principal light rays in the region where the field of view angle is large is inclined. Further, because for each of the right and left eyes, separate optical systems are used, separate images can be imaged on the right and left eyes.

Further, by configuring such that a part or the whole of the respective eyepiece optical systems existing between the human eyes and the light diffusing bodies can be separately moved in the focus direction, all of myopic persons, hyperopic persons, and astigmatic persons can observe good infinite distance images without wearing eyeglasses or contact lenses. Still further, because by shortening the relative distance between the light diffusing bodies and the eyepiece optical systems, a condition, adapted to image contents, in which nearby objects are observed, can be realized, still more enhanced sense of reality can be obtained.

A tenth invention to achieve the above-described object is the above-described ninth invention, characterized in that said image display device has an adjusting mechanism that adjusts the distance between the optical centers of said first and second eyepiece optical systems and the distance between the first transmitted image and the second transmitted image having transmitted through the light diffusing bodies so that those distances become equal to the eye-width of a user.

In this invention, the image display device has the adjusting mechanism that adjusts the distance between the optical centers of said first and second eyepiece optical systems and the distance between the first transmitted image and the second transmitted image having transmitted through the light diffusing bodies so that those distances become equal to the eye-width of a user; and thus, by appropriately adjusting the distances in accordance with the user's eye-width, the light diffusing bodies are made to be more easily viewable, and, at the same time, sickness due to a sense of discomfort can be prevented.

An eleventh invention to achieve the above-described object is the above-described ninth or tenth invention, characterized in that said light diffusing bodies, which diffuse light, are each a transmission type diffusing plate constituted by a transmission plate on which abrasive grains of a metal oxide or metallic carbide of which grain diameter is precisely controlled with micron-grade are coated.

By the use of such diffusing plates, the diffusing angle can be made $\pm60$ degrees or more, and even in the case of taking the look-around eye into account, a field of view angle of $\pm22.5$ degrees or more can be secured. Further, even when viewing an image quality comparable to that of a DVD or high-definition image, the diffusing plate coated with such abrasive grains does not make one feel a sense of abrasive grains and makes it possible to obtain a natural image quality.

A twelfth invention to achieve the above-described object is the above-described eleventh invention, characterized in that said abrasive grains are made of at least one of silicon carbide, chromium oxide, tin oxide, titanium oxide, magnesium oxide, and aluminum oxide and in that said transmission plate is a polyester film.

The abrasive grains made of such materials are adequate to be made to be micron-grade grains, and because the polyester film is tough, a high durability can be obtained.

A thirteenth invention to achieve the above-described object is any one of the above-described eighth to twelfth inventions, characterized in that said two-dimensional type image forming device has three pieces of two-dimensional transmission type or reflection type liquid crystal device elements, each corresponding to each of the colors of green (G), blue (B), and red (R), which are perpendicular to the light beam emitting direction, an illumination device that illuminates the liquid crystal device elements, and an image combining device that combines the lights emitted from said liquid crystal device elements into a single image.

In this invention, because the lights emitted from the liquid crystal device elements, each corresponding to each of the colors of Q B, and R, are combined into a single image, liquid crystal device elements having a large number of pixels can be used, and thus, even when viewing a screen of a large field of view angle, the seams between the pixels can be made to be unnoticeable.

A fourteenth invention to achieve the above-described object is any one of the above-described ninth to thirteenth inventions, characterized in that with respect to each of said first and second eyepiece optical systems, at least one surface of the lenses constituting is made to be a conic surface with conic constant K<0 and in that each of said eyepiece optical systems has at least two cemented lenses.

As will be described later in the best mode for carrying out the invention section, by adopting such configuration, the distortion and chromatic aberration of the optical systems can be improved.

A fifteenth invention to achieve the above-described object is a simulation device that uses any one of the image display devices of the above-described first to fourteenth inventions, characterized in that said simulation device has a for-somesthesia-purpose driving portion that in accordance with an image displayed on said image display device, gives a for-somesthesia-purpose stimulus other than an acoustic stimulus to a user or controls the posture of the user.

In this invention, because the simulation device has the for-somesthesia-purpose driving portion that in accordance with an image displayed on the image display device, gives a for-somesthesia-purpose stimulus other than an acoustic stimulus to a user or controls the posture of the user, the simulation device can give the user a sense of reality. To provide an acoustic stimulus is a matter of course as a simulation device that displays images; therefore, the restriction phrase "other than an acoustic stimulus" is for making clear that the invention features the function of giving a stimulus other than an acoustic stimulus, and the invention is not intended to exclude simulation devices that give acoustic stimuli.

A sixteenth invention to achieve the above-described object is the above-described fifteenth invention, characterized in that said for-somesthesia-purpose driving portion has an air blowing mechanism that blows air from ahead of the image display device and in that the air blowing mechanism has a function of varying the air blowing amount in accordance with the virtual movement speed somesthetically felt through the image displayed on the image display device.

In this invention, because the for-somesthesia-purpose driving portion has the air blowing mechanism and because the air blowing mechanism has a function of varying the air blowing amount in accordance with the virtual movement speed somesthetically felt through the image displayed on the image display device, one can feel a sense of reality in accordance with the screen image through sense organs other than the visual and auditory organs, and the overall sense of reality can be obtained through, e.g., an antiperspirant effect, a sickness preventive effect which is just realized when a car window is wound down, and a relaxation effect.

A seventeenth invention to achieve the above-described object is the above-described sixteenth invention, characterized in that said air blowing mechanism has a control mechanism that controls the air blowing temperature.

In this invention, because the air blowing mechanism has the control mechanism that controls the air blowing temperature, the effect of the above-described sixteenth invention can be further enhanced by blowing an air having a temperature in accordance with the screen image condition.

An eighteenth invention to achieve the above-described object is the above-described sixteenth or seventeenth invention, characterized in that said air blowing mechanism has a control mechanism that controls the fragrance during the air blowing.

In this invention, because the air blowing mechanism has the control mechanism that controls the fragrance during the air blowing, the effect of the above-described sixteenth invention can be further enhanced by blowing an air having a fragrance in accordance with the screen image condition.

A nineteenth invention to achieve the above-described object is the above-described fifteenth invention, characterized in that said simulation device has an operating means by which the user controls with his or her hand or foot the virtual movement speed somesthetically felt through the image displayed on the image display device.

In this invention, because the simulation device has an operating means by which the user controls with his or her hand or foot the virtual movement speed somesthetically felt through the image displayed on the image display device, the simulation device can be used for various kinds of simulations, and the simulation device can also be made to be a sophisticated game machine.

A twentieth invention to achieve the above-described object is the above-described nineteenth invention, characterized in that said operating means is provided with an emergency switch.

In this invention, because the emergency switch is provided, the user, when an emergency arises or when the user feels a sense of discomfort, can halt the simulation device or inform a third person of the sense of discomfort. In particular, because in almost every case, the user's entire range of vision is covered by the image display device, it is important to provide such emergency switch.

A twenty-first invention to achieve the above-described object is the above-described fifteenth invention, characterized in that said for-somesthesia-purpose driving portion has a control device that inclines a portion supporting the user in accordance with the user's body inclination somesthetically felt through the image displayed on the image display device.

A twenty-second invention to achieve the above-described object is the above-described twenty-first invention, characterized in that said portion supporting the user supports the user in a state of standing or walking.

A twenty-third invention to achieve the above-described object is the above-described twenty-first invention, characterized in that said portion supporting the user supports the user in a state of sitting or in a state of sitting and rowing with feet.

A twenty-fourth invention to achieve the above-described object is the above-described twenty-first invention, characterized in that said portion supporting the user supports the user in a state that the user is lying and a portion of the user's body is suspended upwardly or in a state that the user's entire body is supported by the user's portion other than feet and buttocks.

In these twenty-first to twenty-fourth inventions, with the simulation device being provided with the means that inclines the portion supporting the user in the right, left, up, and down directions in accordance with a sense of movement felt by the user through the image displayed on the image screen and also inclines the portion supporting the user in the back, forth, right, and left directions in accordance with the virtual inclination condition of the image screen, the semicircular sense and the visual sense can be made coincide with each other, which can lead to the prevention of VE sickness and the enhancement of the sense of reality. Further, because to the portion supporting the user is introduced a structure by which the user is supported in a state of standing or walking, a structure by which the user is supported in a state of sitting or in a state of sitting and rowing with feet, or, further, a structure by which the user is supported in a state that the user is lying and a portion of the user's body is suspended upwardly or in a state that the user's entire body is supported by the user's portion other than feet and buttocks, game machines, search systems (which will be described in detail), and simulation devices, all of which have various applications and a high sense of reality and absorption, can be provided.

A twenty-fifth invention to achieve the above-described object is the above-described fifteen invention, wherein either one of a high-definition image or an image formed by a computer is selected and displayed on said image display device, said simulation device being characterized in that it has a function that when the high-definition image is displayed, said for-somesthesia-purpose driving portion is controlled with a sequence predetermined in accordance with the display of the high-definition image and that when the image formed by the computer is displayed, the image is formed by the computer and said for-somesthesia-purpose driving portion is controlled, in response to input information inputted by the user through an operating portion.

In the case where a high-defnition moving image is displayed, it is difficult to analyze the display content and control the for-somesthesia-purpose driving portion because the moving image's motion is rapid. However, because, in contrast to, e.g., the ordinary television, a high-definition image displayed on a simulation device is predetermined, a sequence that drives a for-somesthesia-purpose driving portion can be prepared beforehand in accordance with the high-definition image. In this invention, by applying this advantage, when the high-definition image is displayed, the for-somesthesia-purpose driving portion is driven with the sequence prepared beforehand, in synchronization with the high-definition image. In contrast, because the image formed by the computer changes in response to the user's operation, the image is formed by the computer, and the for-somesthesia-purpose driving portion is controlled, in response to the input information inputted by the user through the operating portion.

A twenty-sixth invention to achieve the above-described object is the above-described fifteen invention, wherein a high-definition image and an image formed by a computer are combined and displayed on said image display device, said for-somesthesia-purpose control portion being characterized in that it has a function of controlling with a sequence predetermined in accordance with the display of the high-definition image said for-somesthesia-purpose driving portion and of, on the other hand, forming by the computer an image in response to input information inputted by the user through an operating portion.

In this invention, the high-definition image and the image formed by the computer are combined and displayed on the image display device, and, typically, the high-definition image constitutes the background, and the image formed by the computer becomes the image formed in response to the input information inputted by the user through the operating portion. In this invention, the for-somesthesia-purpose driving portion is configured to be controlled in accordance with the high-definition image and is, for the reason having described in connection with the twenty-fifth invention, driven with the sequence control. And, the image formed by the computer is only displayed and is not used for the purpose of controlling the for-somesthesia-purpose driving portion.

A twenty-seventh invention to achieve the above-described object is the above-described twenty-fifth or twenty-sixth seventeenth invention, characterized in that said simulation device has a first two-dimensional image forming device that forms a high-definition image and a second two-dimensional image forming device that forms an image formed by a computer and has a means that combines optically or electrically the image of the first two-dimensional image forming device and the image of the second two-dimensional image forming device.

In this invention, the image of the first two-dimensional image forming device and the image of the second two-dimensional image forming device are combined optically or electrically. To select either one of the images, it is only required that the display of the other image display device be halted. When combining the both images, they may be combined as they are, or it may be configured such that after forming an image from the image to be displayed as the background by erasing the image portion on which the other image is to be displayed, both of the images are combined.

A twenty-eighth invention to achieve the above-described object is the above-described twenty-seventh invention, characterized in that said simulation device has high-definition image information having a wider region than the high-definition image information displayable with said first two-dimensional image forming device and has a function of having, in accordance with the outputs of a detecting device that detects the direction of the user's face when the user wears said image display portion, a portion of said high-definition image information having a wider region formed on said first two-dimensional image forming device.

In this invention, because the image in accordance with the direction of the user's face can be displayed, the sense of reality can be increased.


BRIEF DESCRIPTION OF THE DRAWINGS

FIG. 1 is a drawing showing an outline of an optical system in an image display device, an embodiment of the present invention.

FIG. 2 is a drawing showing in detail the eyepiece optical system shown in FIG. 1.

FIG. 3A is a spot diagram showing the chromatic aberration of the eyepiece optical system shown in FIG. 2 when the eye view center is 0 degree.

FIG. 3B is a spot diagram showing the chromatic aberration of the eyepiece optical system shown in FIG. 2 when the eye view center has moved to 5 degrees.

FIG. 3C is a spot diagram showing the chromatic aberration of the eyepiece optical system shown in FIG. 2 when the eye view center has moved to 10 degrees.

FIG. 3D is a spot diagram showing the chromatic aberration of the eyepiece optical system shown in FIG. 2 when the eye view center has moved to 15 degrees.

FIG. 4 is a drawing showing in detail the relay magnification optical system shown in FIG. 1.

FIG. 5A is a drawing showing the MTFs on an image height-by-image height basis of the relay magnification optical system shown in FIG. 4 when the focus is displaced from the optimal value by -3.0 mm.

FIG. 5B is a lateral aberration plot output drawing of the relay magnification optical system shown in FIG. 4.

FIG. 5C is a spot diagram of the relay magnification optical system shown in FIG. 4.

FIG. 6 is a conceptual plan view showing a configuration of an image display device, an embodiment of the present invention, and the relationship between the head and the neck.

FIG. 7A is a drawing showing the relationship between the direction of the face and an image display device.

FIG. 7B is a drawing showing the relationship between the direction of the face when the user is in a state of lying and an image display device.

FIG. 7C is a drawing showing the relationship between the direction of the face when the user is in a state of lying but is lifting the face and an image display device.

FIG. 7D is a drawing showing the relationship between the direction of the face when the user is in a state of standing but is looking upward and an image display device.

FIG. 8 is a schematic drawing showing a supporting mechanism of an image display device.

FIG. 9 is drawing showing the relationship between the movement of the supporting mechanism and the image information, when the user looks down.

FIG. 10 is drawing showing the relationship between the movement of the supporting mechanism and the image information, when the user turns the head in the side direction.

FIG. 11 is drawing showing the relationship between the movement of the supporting mechanism and the image information, when the user inclines the head.

FIG. 12 is a schematic drawing showing a mechanism that supports a movable display in an embodiment of the present invention.

FIG. 13 is a plan view of a magic hand mechanism.

FIG. 14 is a schematic drawing showing a display presentation type device that is an embodiment example of a simulation device of the present invention and is enjoyed in a state of sitting.

FIG. 15 is a drawing showing a state in which with the display presentation type device shown in FIG. 14 being used, images during running are displayed on an image screen.

FIG. 16 is a drawing showing a state in which with the display presentation type device shown in FIG. 14 being used, a state of climbing down a steep cliff is displayed on an image screen.

FIG. 17 is a schematic drawing showing a display presentation type device that is an embodiment example of a simulation device of the present invention and is enjoyed in a state of standing.

FIG. 18 is a drawing showing an outline of an optical system that optically combines a high-definition image and an image formed by a computer.

FIG. 19 is a drawing showing an example of a combined image.

FIG. 20 is a drawing showing an example of a method of displaying a high-definition image.

FIG. 21 is a drawing showing an example of a method of displaying a high-definition image.

FIG. 22 is a drawing showing an example of a method of displaying a high-definition image.

FIG. 23 is a drawing showing a method that with a high-definition image being made a short one of about one minute, makes a person having obtained a high shooting-down score through a game select a next stage.

FIG. 24 is a drawing showing a time chart for implementing the method shown in FIG. 23.

FIG. 25 is a schematic drawing showing a display presentation type device that is an embodiment example of a simulation device of the present invention and is enjoyed in a state of lying.

FIG. 26A is a drawing showing an example of a display presentation type game machine according to prior art.

FIG. 26B is a drawing showing an example of a display presentation type game machine using a head mount display according to prior art.

FIG. 26C is a drawing showing an example of a large image screen display type game machine (I-MAX) according to prior art.

FIG. 26D is a drawing showing a box-type multidirectional display simulation device according to prior art.

FIG. 27A is an optical path drawing of an eyepiece optical system mechanism in the case of performing a first optical design using prior art.

FIG. 27B is a field aberration output drawing of the optical system of FIG 27A.

FIG. 27C is a lateral aberration plot output drawing at $\pm 15$ degrees of the optical system of FIG. 27A.

FIG. 27D is a lateral aberration plot output drawing at $\pm 30$ degrees of the optical system of FIG. 27A.

FIG. 28A is an optical path drawing of an eyepiece optical system mechanism in the case of performing a second optical design using prior art.

FIG. 28B is a field aberration output drawing of the optical system of FIG. 28A.

FIG. 28C is a lateral aberration plot output drawing at $\pm 15$ degrees of the optical system of FIG. 28A.

BEST MODE FOR CARRYING OUT THE INVENTION

In the following, examples of the mode for carrying out the present invention will be described, referring to the drawings. In the embodiments of the present invention shown below, an image display device using an eyepiece type magnification optical system similar to that of the image display device shown in FIG. 26B is used. However, because such an image display device system as mounted on the head as shown in FIG. 26B is limited with respect to its weight as described earlier, it is configured such that the image display device is supported by a portion other than the user and thus the image display device is allowed to be heavier.

In addition, because regarding a system in which, like the eyepiece optical system as is generally used in FIG. 26B, a pupil position is located inside the magnification optical system and in which a liquid crystal display device is positioned in a position conjugate with the retina of the eyeball, light beams of which principal ray is inclined are cut by the pupil when the lateral shift of human eyeballs (in the present specification, also referred to as "look-around eye action") occurs, the system cannot address the "look-around eye action," even in the case where the field of view angle has been successfully made larger. Thus, a system in which a diffusing type screen is positioned on the liquid crystal display surface side of the eyepiece optical system and in which the image from the liquid crystal device is projected onto the screen is adopted.

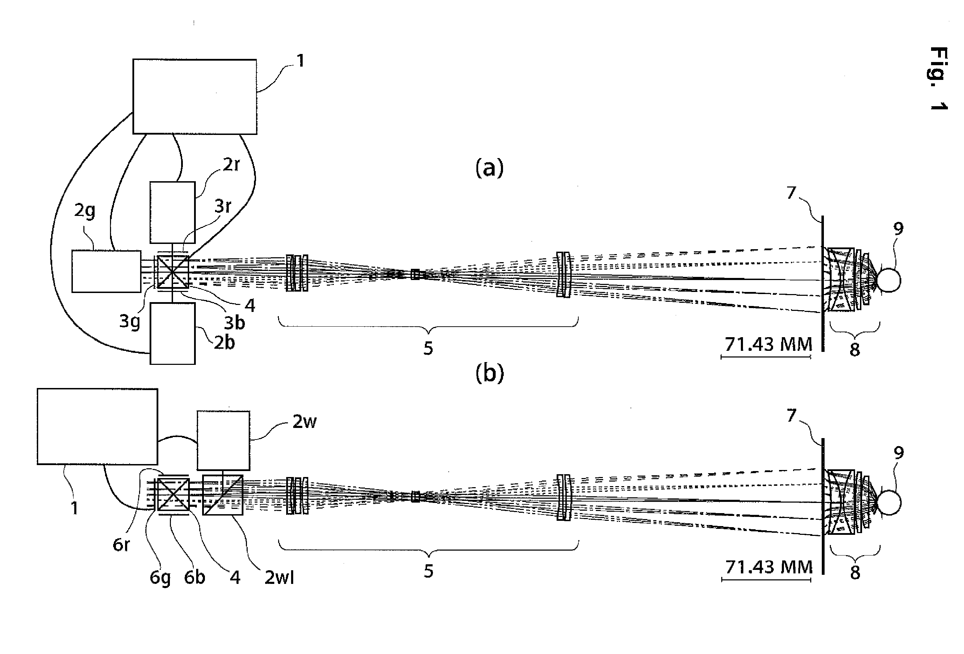

FIG. 1 is a drawing showing an outline of an optical system in an image display device, an embodiment of the present invention. In FIG. 1(a), illumination systems 2g, 2b, and 2r are respectively an illumination system that emits an illumination light made by uniformizing the light beam emitted from a green LED, an illumination system that emits an illumination light made by uniformizing the light beam emitted from a blue LED, and an illumination system that emits an illumination light made by uniformizing the light beam emitted from a red LED and respectively illuminate from the back side two-dimensional liquid crystal devices 3g, 3b, and 3r that correspond to each of the illumination systems. The light beams having passed through two-dimensional liquid crystal devices 3g, 3b, and 3r are combined by color beam multiplexing prism 4; and relay magnification optical system 5 projects the images on the two-dimensional liquid crystal devices 3g, 3b, and 3r screen 7 as an image magnified by about 3 to 5 times.

It is configured such that the light beam having passed through screen 7 projects, as a light beam diffused by screen 7 and having an NA larger than that of the incident light beam, via eyepiece optical system 8, the image on screen 7 onto the retina in eyeball 9. Note that all those processes are controlled by image output controller 1; and an image is projected onto the retina in eyeball 9 as a sharp color image.

While in the optical system shown in FIG. 1(a), the transmission type two-dimensional liquid crystal devices 3g, 3b, and 3r, called LCD, are used, reflection type two-dimensional liquid crystal devices 6g, 6b, and 6r, called LCOS, are used in the optical system shown in FIG. 1(b).

In this case, illumination system 2w and polarization beam splitter 2wl constitute the illumination means. The light beam having been emitted from a white light LED in illumination system 2w and having been uniformized is temporarily made to be a polarized light by polarization beam splitter 2wl and is divided, via a λ/4 plate, into a green light, a blue light, and a red light by color beam multiplexing prism 4; and each of the green, blue, and red lights illuminates reflection type two-dimensional liquid crystal devices 6g, 6b, and 6r, respectively. It is configured such that the light beams reflected by two-dimensional liquid crystal devices 6g, 6b, and 6r are combined again by color beam multiplexing prism 4; the combined light beam returns to polarization beam splitter 2wI, passes through it this time, and thereafter projects, after passing through the path shown in FIG. 1(b) (the same as that described in connection with FIG. 1(a)), the image on screen 7 onto the retina in eyeball 9. Because the optical system subsequent to polarization beam splitter 2wI is the same as that shown in FIG. 1(a), description thereof will be omitted.

Here, in order to obtain a field of view angle of ±22.5 degrees or more under which a human does not feel a sense of discomfort, the optical system as shown in FIG. 1 has been adopted. However, generally speaking, even if a screen is used, it is not easy to provide an optical system that has a field of view angle of ±22.5 degrees or more and, at the same time, is capable of addressing the look-around eye action. In this regard, to foster better understanding, the reason why it is difficult to realize an optical system having a field of view angle of ±22.5 degrees or more will be explained briefly.

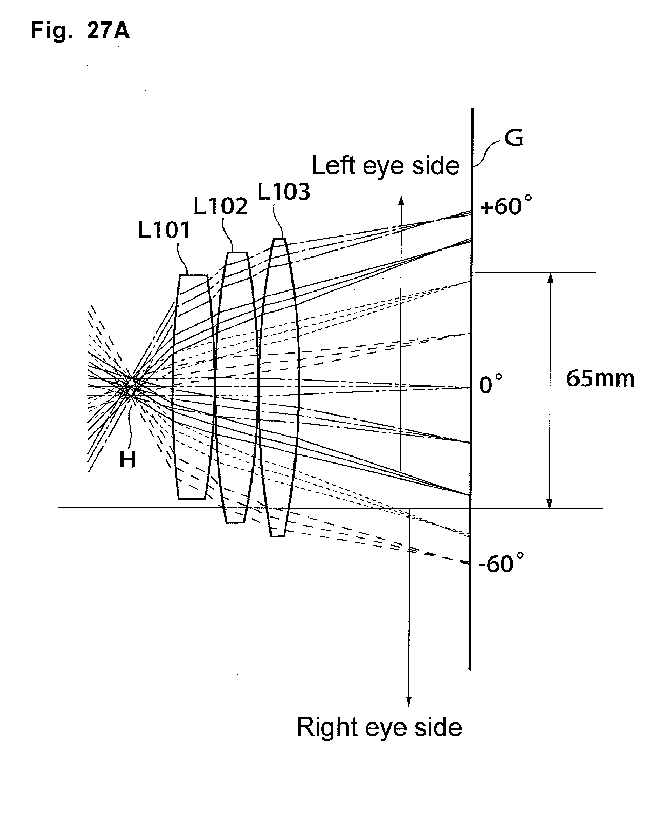

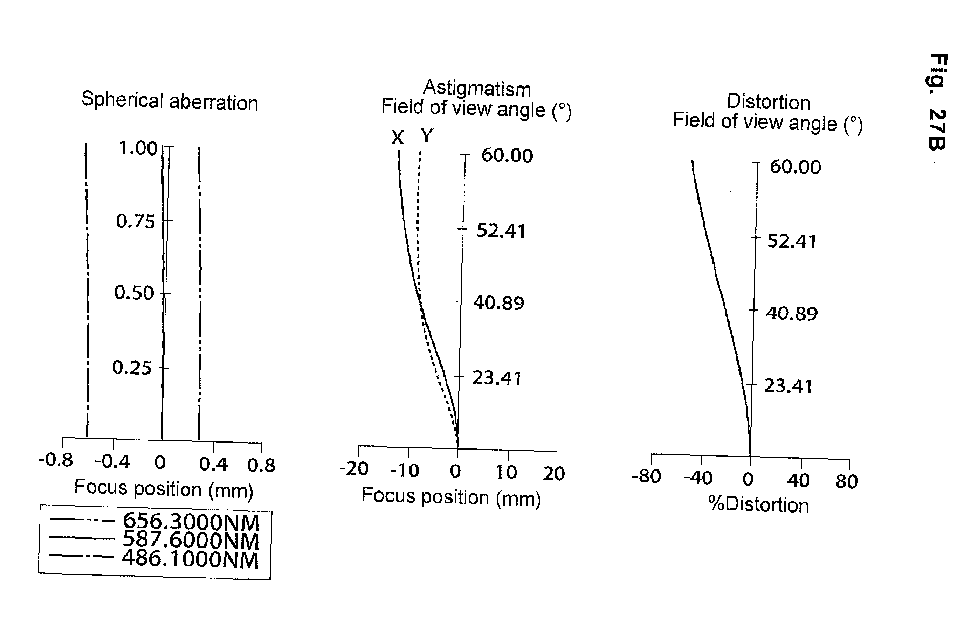

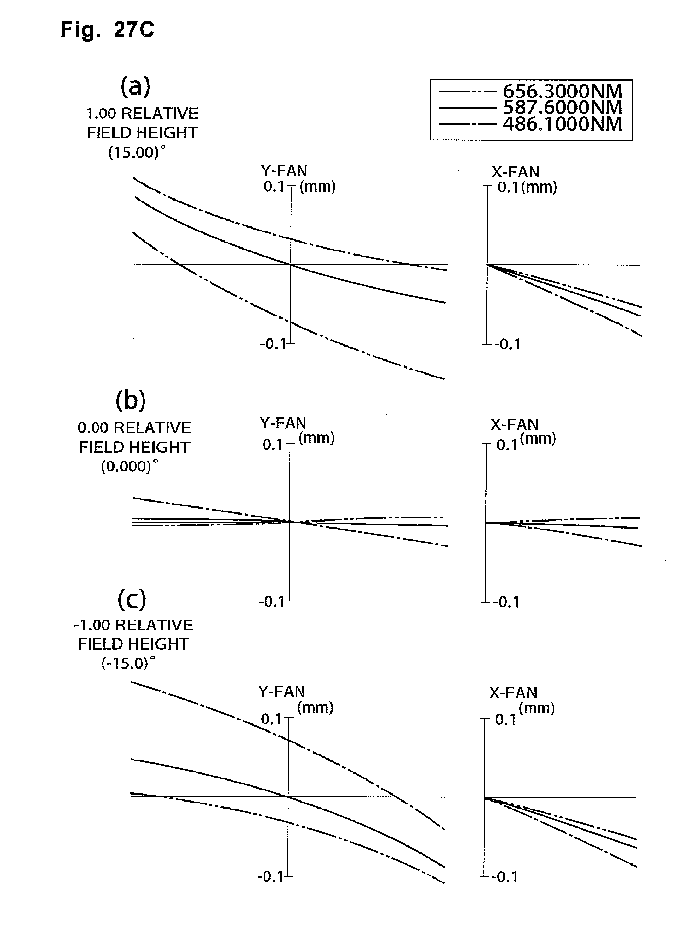

FIGS. 27A-27D show an example of an optical system designed to obtain a large field of view angle. This is, as shown in the optical system schematic of FIG. 27A, an example of the case in which assuming the human pupil as H relative to light emitting picture plane G (which, although called light emitting picture plane here, includes not only an object that emits light by itself or forms an image by reflecting light, but also an object, such as a screen, in which an image is projected thereon and the light coming out therefrom is observed by the eye), three convex lenses L101, L102, and L103 that are made of glass material LAC7 having a low refractive index but having a small color dispersion and have a curvature of 220 cm are used, and the light beams of FIG. 27A respectively represent the light beams corresponding to a field of view angle of -60 degrees, -45 degrees, -30 degrees, -15 degrees, 0 degree, 15 degrees, 30 degrees, 45 degrees, and 60 degrees. While, in FIG. 27B, spherical aberration, astigmatism, and distortion are shown sequentially from the left, an astigmatism of 10 mm is present at a field of view angle of about ±30 degrees, and a distortion of 12.6% is present. Further, it can be seen from FIG. 27C that a chromatic aberration of about 150 $\mu$m is present even at a field of view angle of about ±15 degrees.

It is generally known that two or more kinds of glass materials having different color dispersions are combined to correct chromatic aberration, and thus there exist optical systems, such as loupe optical systems, in which a pupil size of about 5 mm is set and various aberrations, including chromatic aberration, are corrected within the range of ±30 degrees. The reason that such an optical system design can be performed with ease is that because such an optical system need not be used with the positions of the optical system and the eyeball being fixed, the position of optical axis of the optical system and the position of the pupil of the eyeball can always be adjusted so that they are positioned most appropriately.

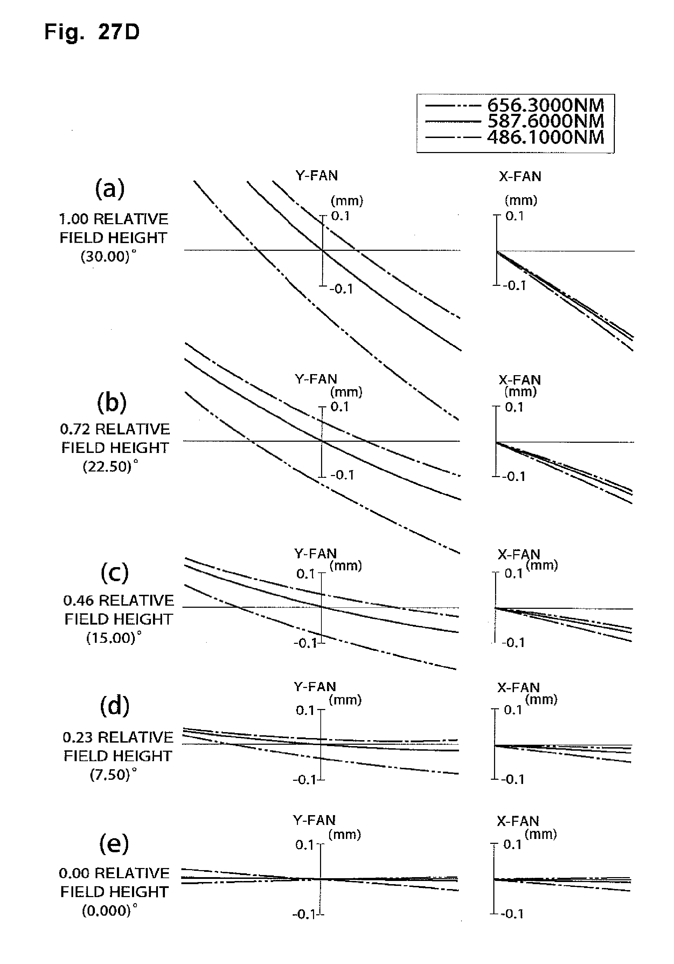

However, as an eyepiece optical system for a wearable display that is used to observe an image with the position of an display and the position of the eyes being fixed and with separate eyepiece optical systems being used for the right and left eyes, there is only an eyepiece optical system having a field of view angle of less than ±22.5 degrees. In FIG. 27D, various aberrations at 0 degree, 7.5 degrees, 15 degrees, 22.5 degrees, and 30 degrees in the case of using convex lenses L101, L102, and L103 are shown. Although chromatic aberration is corrected by the use of the lens combination, a chromatic aberration of 200 $\mu$m and various aberrations of 400 $\mu$m are present at the position of 22.5 degrees.

It can be seen that assuming the size recognizable by the human eye to be about 100 $\mu$m, this design is insufficient. Thus, it can be inferred that to make aberrations small down to the limit recognizable by the human eye, a combination of only convex lenses does not suffice, and a combination of a convex lens and a concave lens is required.

However, regarding a combination of a convex lens and a concave lens, the concave lens makes the differences between the inclinations of the principal rays of the respective light beams from the light emitting picture plane small and thus cannot deflect diverging light beams so that each of the inclinations of the principal rays at the position of the pupil of the eyeball are made large, which necessarily makes the lens diameter larger. That is, as can be clearly seen from the light beams of FIG. 27A, of which optical system is constituted only by the convex lenses, if such eyepiece lens is applied to each of the right and left eyes, then, assuming an eye-width (the distance between the right and left eyes) of 6.5 cm, the right and left eyepiece optical systems, even though they are constituted only by the convex lenses, overlap with each other on the nose side, and thus a nose side field of view angle of up to about 30 degrees can only be obtained. A further attempt to eliminate aberrations by combining a convex lens with a concave lens results in the extension of the principal ray of each of the beams coming out of the eye by the effect of the concave lens, and thus the nose side field of view becomes still smaller, which means, at best, a field of view angle of about 22.5 degrees.

Next, it will be considered how to obtain a larger field of view. In order to obtain an image with a high sense of reality, it is necessary to obtain a field of view equivalent to or more than the field of view that is associated with the condition when a human wears glasses, and a sufficient field of view angle on the nose side, in which a limit is placed on the eyepiece lens diameter, must be secured. In order to obtain a still larger field of view angle on the nose side, the diameters of the convex lenses are to be made still larger, and glass materials having a higher refractive index are to be used.

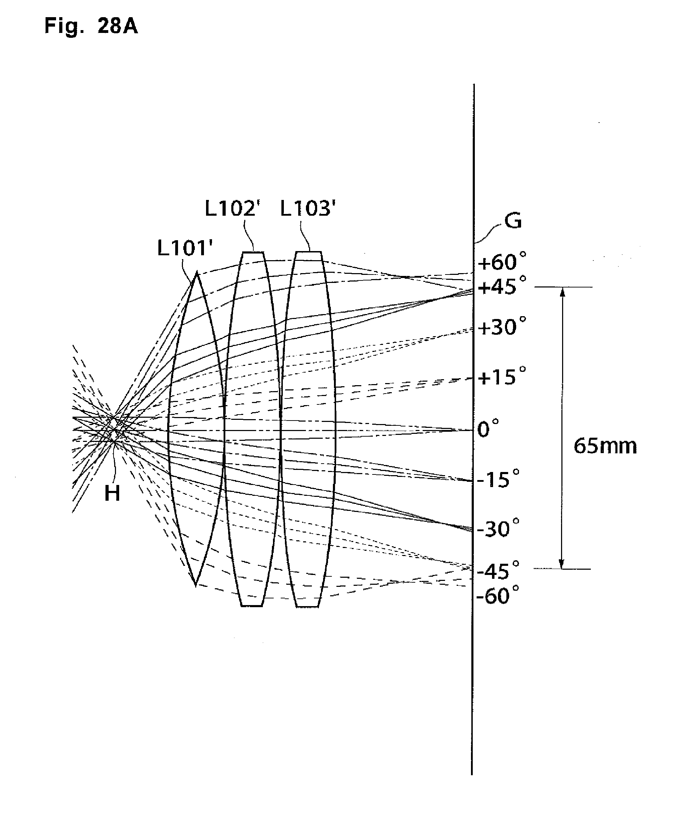

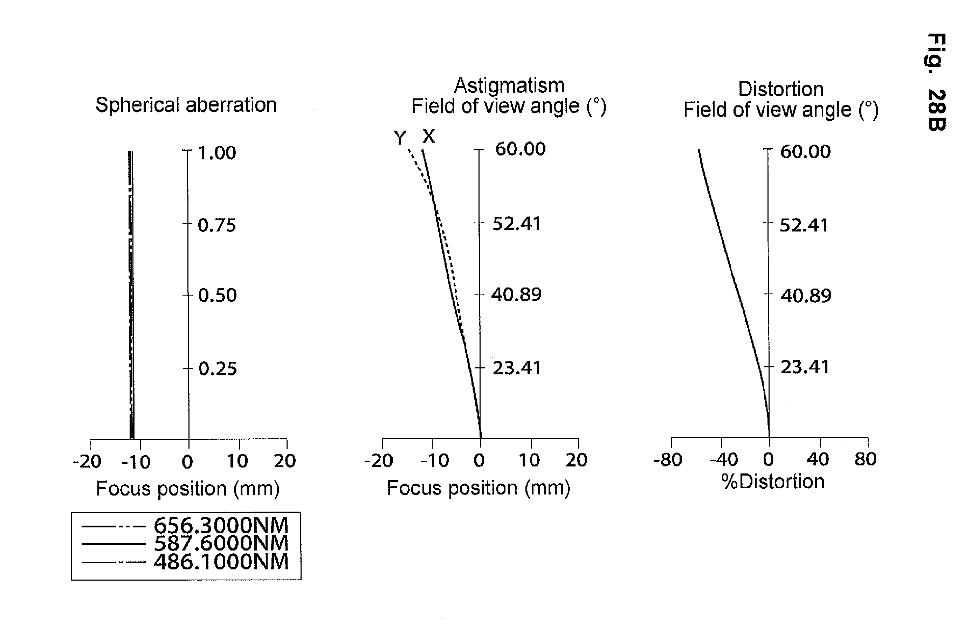

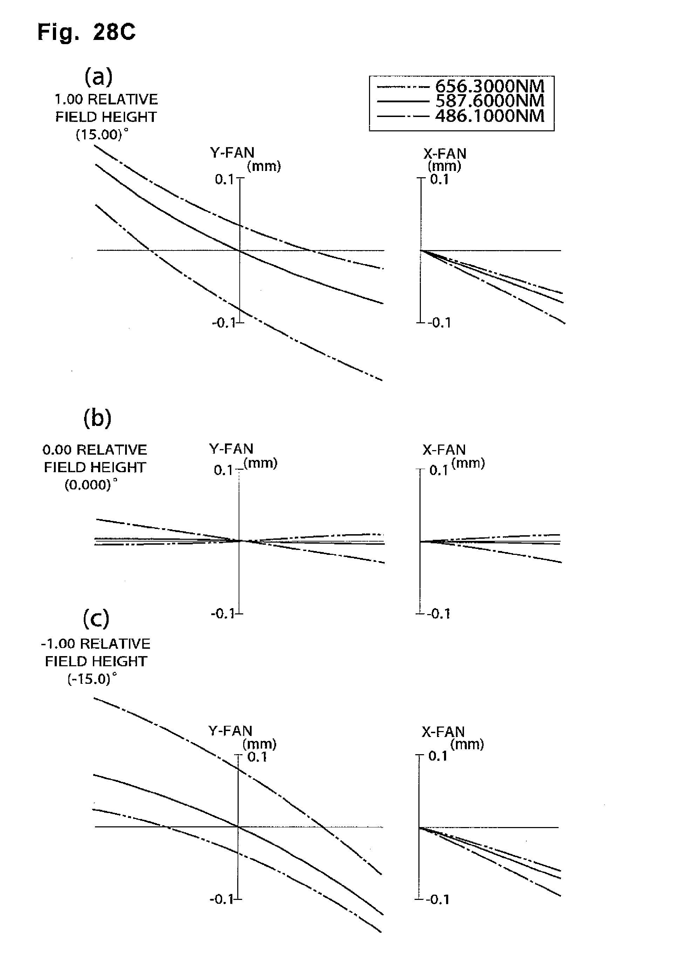

Here, an example in which, to obtain a wider field of view, three convex lenses L101', L102', and L103' which are arranged sequentially from the eyeball side and each of which has a curvature of 100 cm, 200 cm, and 220 cm is shown in FIGS. 28A-28C. In FIG. 28A, G denotes a light emitting picture plane, and H denotes the pupil of the human eye; as with FIG. 27A, the lenses are made of glass material LAC7 having a low refractive index but having a small color dispersion. It can be seen from the light beams in FIG. 28A that a wide field of view of about 45 degrees is obtained on the nose side within the range of 65 mm. However, as can be seen from FIG. 28B, while the astigmatism is improved, around the field of view angle of $\pm 30$ degrees, to be 3.5 mm, the distortion has become larger, i.e., 13.5%. Further, as can be seen from FIG. 27C, a chromatic aberration of about 150 $\mu$m is present even at the field of view angle of $\pm 15$ degrees. As just described, it can be seen that, with respect to an optical system that is constituted only by convex spherical lenses, it is very difficult to enlarge its field of view angle up to more than $\pm 22.5$ degrees and to correct its various aberrations including chromatic aberration.

Because, in the above, it has been understood that it is difficult, in the prior art, to design an eyepiece optical system having a field of view angle of more than $\pm 22.5$ degrees, the stages through which the present invention was made will now be described.

The reason that, in the prior art line of thought, the aberrations are not improved as indicated in FIG. 28A is that with respect to the light beams, having their light beam paths at the lens periphery, which correspond to the portions in which the field of view angle is large, the curvatures of the lenses are too high. To address this problem, a design in which the curvatures are reduced, the aberrations are improved by combining a concave lens, and, further, the number of lenses is increased is typically performed. But, in the case of a mechanism in which both eyes are each provided with a separate eyepiece system, the lens diameter is required to be equal to or less than 65 mm because it is limited by the eye-width, as described above.

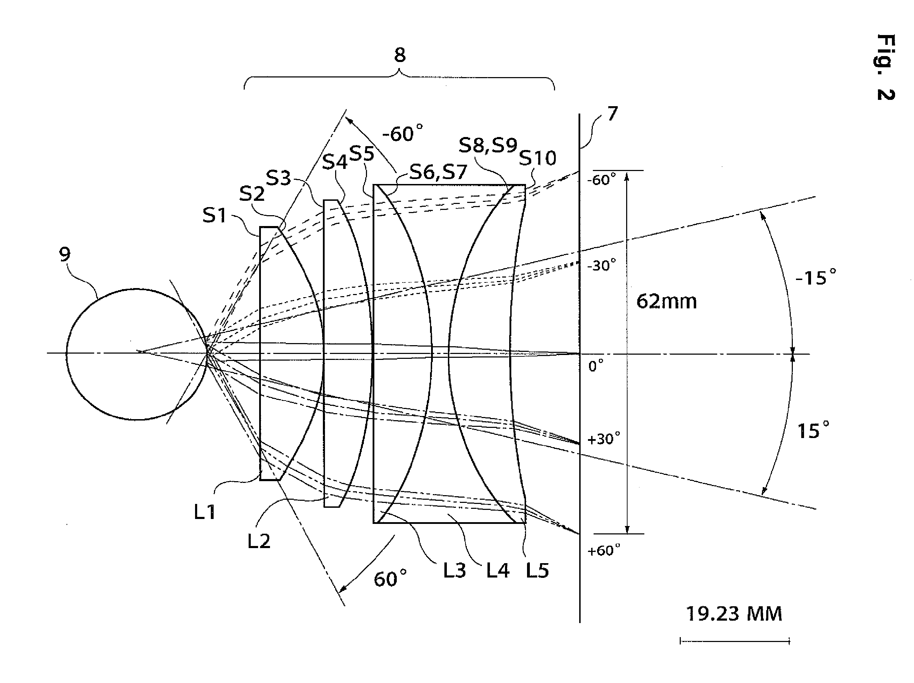

To address the above difficulties, in eyepiece optical system 8, an embodiment of the present invention, shown in FIG. 1, at least one of the lens surfaces of those convex lenses is made a conic surface. This optical system is shown in FIG. 2. In the optical system shown in FIG. 2, it is configured such that the back side surface of lens L1, which is located nearest to the eyeball, is made a conic surface, thereby suppressing coma aberration and astigmatism, and thus, even if the pupil position changes due to a look-around eye action, good images can be projected into the eyeball. In a conic surface, its curved surface Z(r) can be expressed:

$$Z(r) = \frac{c \cdot r^2}{1 + \sqrt{\{1 - (1+k) \cdot c^2 \cdot r^2\}}}$$

where c is a constant representing a curvature, and $r^2 = x^2 + y^2$, k denotes the conic constant, and k<0 is used. Here, with regard to the conic surface, the glass material SLAH66, which can be processed with ease, is used. Further, with the chromatic aberration correction being made by introducing a cemented lens (L3, L4, L5) having two cemented surfaces, a glass material having a high refractive index is used for the convex lens L2 on the pupil side. The optical design values of the optical system shown in FIG. 2 are shown in Table 1. The lens diameters are all equal to or less than 60 mm. Note that each of the curvature radiuses of the surfaces shown in the Tables in this specification, including Table 1, is expressed by a negative number when its curvature center is on the pupil side relative to the lens surface position and is expressed by a positive number when its curvature center is on the side of light emitting picture plane G. In addition, the curvature radiuses and the surface separations on the optical axis are expressed in the unit of mm, unless otherwise specified.

(Table 1)

| Surface No. | Surface Type | Curvature (mm) | Center Thickness (mm) | Glass Material Code | Lens Diameter (mm) | Separation (mm) |
|---|---|---|---|---|---|---|
| S1 | Plane | INFINITY | | | | 10 |
| <L1> | | | 11.0 | SLAH66 | 60.0 | |
| S2, | Conic | -31.0 (Conic constant k=-1.3) | | | | 0.2 |
| S3 | Plane | INFINITY | | | | |
| <L2> | | | 8.5 | SLAH55 | 60.0 | |
| S4 | Sphere | -66.021 | | | | 0.2 |
| S5 | Plane | INFINITY | | | | |

(continued)

| Surface No. | Surface Type | Curvature (mm) | Center Thickness (mm) | Glass Material Code | Lens Diameter (mm) | Separation (mm) |
|---|---|---|---|---|---|---|
| <L3> | | | 10.5 | SLAH58 | 60.0 | |
| S6 | Sphere | -53.0 | | Surface S6 and surface S7 are cemented to each other. | | |
| S7 | Sphere | -53.0 | | | | |
| <L4> | | | 3.0 | SNPH2 | 60.0 | |
| S8 | Sphere | 45.0 | | | | |
| S9 | Sphere | 45.0 | | Surface S8 and surface S9 are cemented to each other. | | |
| <L5> | | | 11.0 | SLAH58 | 60.0 | |
| S10 | Sphere | 150.0 | 12.636 | | | |

The cemented lens is constituted by the three lenses, L3, L4, and L5; the color dispersion of the lens glass material of L4 is larger than that of L3 and L5; and the cemented surfaces are composed of, sequentially from the side of pupil H, a concave surface and a convex surface. Thus, it has become that large chromatic aberration can be corrected, and, further, also with respect to the convex lens L2 on the pupil side, a glass material having a high refractive index is used, which has enabled the deflection angles of the light beams passing through the lens periphery to be made large. In accordance with this method, the lens diameters are made equal to or less than the 65 mm eye-width, and the aberrations at the time of look-around eye action are also improved.

As can be seen from the light beam drawing of FIG. 2, a field of view angle of ±60 degrees has been obtained within a width range of 62 mm on screen 7, and, at the same time, the lens configuration is configured such that even at the time of look-around eye action, good aberrations are obtained at the eye view center portion. More specifically, in FIG. 2, the field of view angle of ±60 degrees represents the field of view angle when the eyeball is directed to the center direction, and it can be seen that the field of view angle is not cut by eyepiece optical system 8.

However, when the human eye performs the look-around eye action, since the center of eyeball 9 is the rotational movement center, as can be understood by paying attention to the lines in FIG. 2 of which starting point is the center of the eyeball and of which inclination angles relative to the optical axis are ±15 degrees, the lateral shift of the pupil position and the inclination of the principal rays occur at the time of look-around eye action. Generally, the range within which a human performs the look-around eye action without moving his or her head and without feeling a sense of discomfort corresponds to the range of ±30 degrees; and, when looking at things located outside of this range, the human spontaneously performs an action by which he or she slightly changes the direction of his or her head. On the other hand, with regard to eyesight, it is known that while the human eye has a high eyesight at the eye view center, the eyesight at the shifted angle of ±5 degrees from the eye view center deteriorates down to a half thereof; the eyesight at the shifted angle of ±10 degrees deteriorates down to a fourth thereof; the eyesight at the shifted angle of ±15 degrees deteriorates down to an eighth thereof.

Thus, the eyepiece lens is not required to have good aberrations for its entire field of view angle; and when good aberrations within the range of ±10 degrees from each eye view center within the eye view center shift angle of ±30 degrees are secured, the sense of reality will not be reduced as long as things located outside the range can be seen and their movements can be recognized, even if the images of the things are blurred. Moreover, because, in an embodiment of the present invention, it is arranged such that the field of vision image is moved in accordance with the user's head movement, sharp images within a range of about ±15 degrees would practically suffice, and when viewing images located outside the range, turning the user's head toward the direction of the images would suffice.

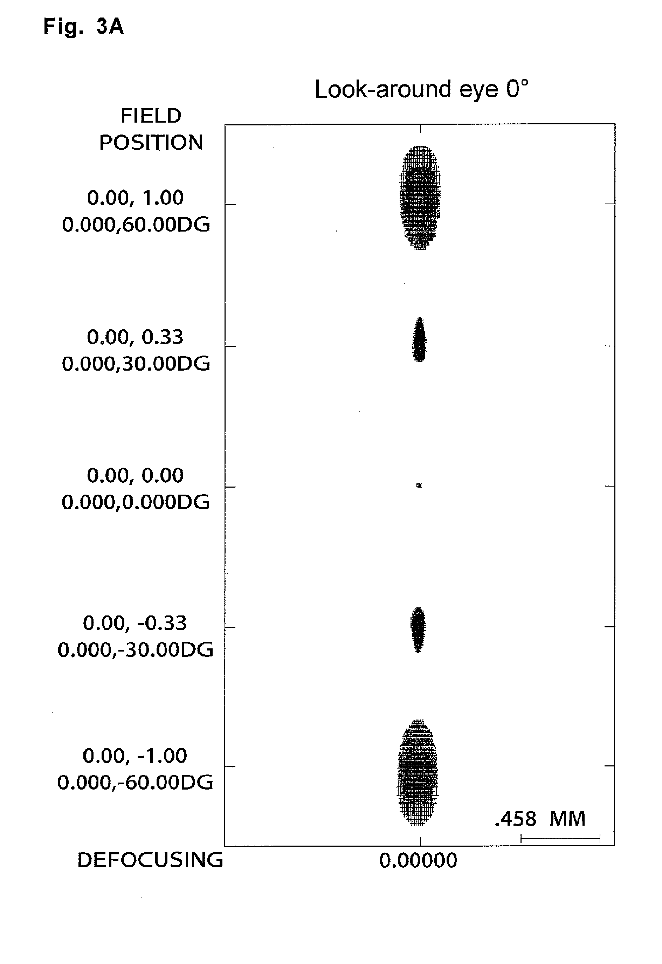

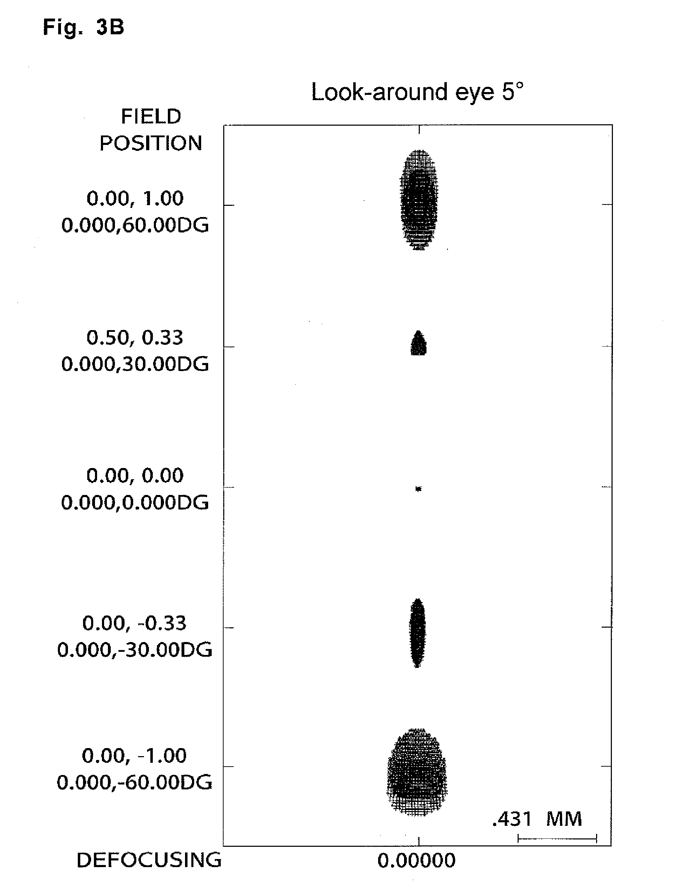

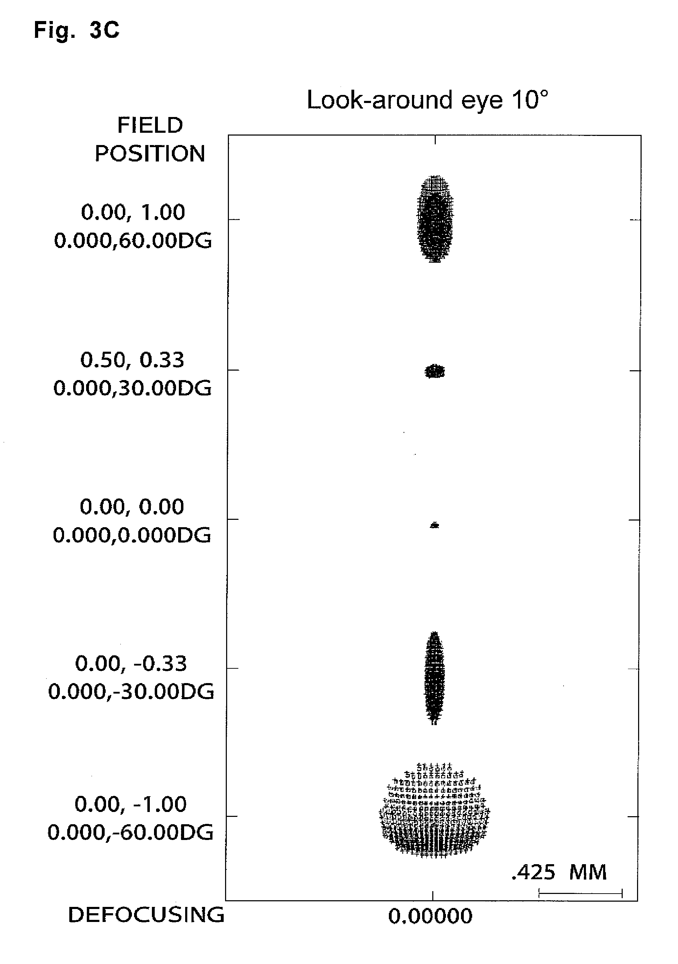

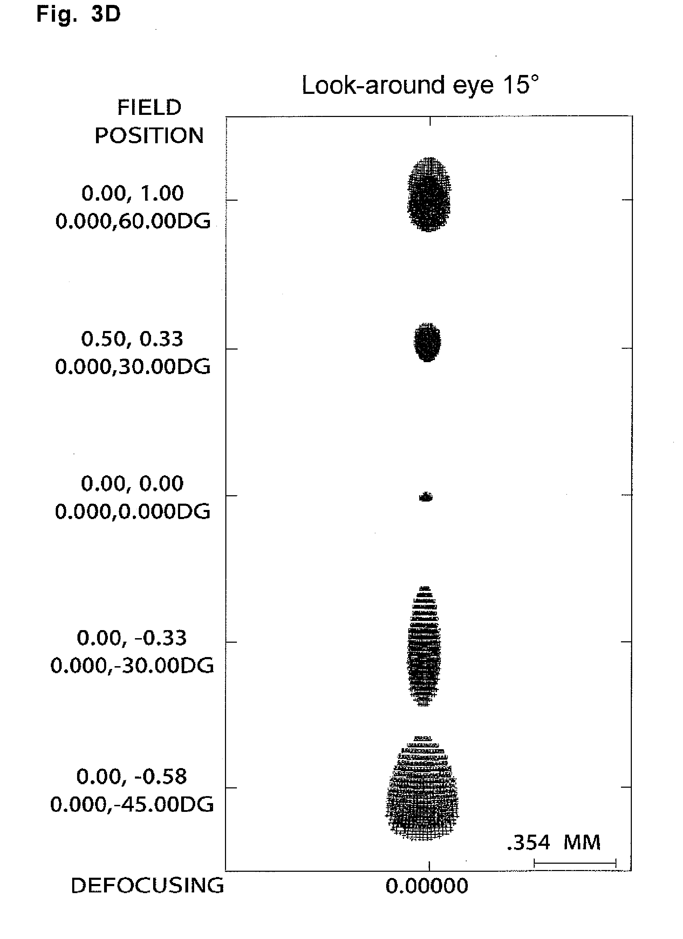

FIGS. 3A-3D are the aberration spot diagrams, each representing the cases where the eye view center is moved to 0 degree, 5 degrees, 10 degrees, and 15 degrees, respectively, and each showing the results of the investigation into the chromatic aberration behaviors at -60 degrees, -30 degrees, 0 degree, 30 degrees, and 60 degrees, each of which represents an angle separation from the eye view center movement angles of 0 degree, 5 degrees, 10 degrees, and 15 degrees. It can be seen from those diagrams that the RMS values, which represent by spots the expansion of the various aberrations, are less than 50 μm at the center, and thus sufficiently good images are obtained even at the time of look-around eye action.

Next, screen 7 will be described. Screen 7 is positioned at a position that is, relative to eyepiece optical system 8, conjugate with the retina; and, when taking the overall size into consideration, it is most ideal to position a two-dimensional image output device of light emitting type, as represented by, i.e., a liquid crystal displays. However, in the present technology, there is no two-dimensional image output device that is a display of 60 mm square or so and has a dot size that meets the resolution of the image to be magnified by the above-described eyepiece optical system. Thus, as a method for forming an image at the position of screen 7, a method in which, as is performed by a projector, by magnifying by a relay optical system a two-dimensional image output image on which a plurality of very small dot sizes are set two-dimensionally in array in a size of equal to or less than one inch, an image is formed at the position of screen 7 can be conceived.

There are presently various types of projectors, ranging from a type using a liquid crystal display device having a resolution matrix of 320 by 240, called QVGA, to a type in which by using three liquid crystal display devices having a resolution matrix of 1920 by 1080, called SXGA, three color images, each of which corresponds to either one of the colors of G, R, and B, are separately formed and then combined together to triple the resolution. If a liquid crystal display device having a low resolution is utilized as an embodiment of the present invention, the seams between the pixels of the liquid crystal display device are to be recognized by the eye in the case of a movie theater class screen, and the sense of reality will be lost. Thus, when an image quality equal to or higher than that of a projector is desired, it is indispensable to introduce the technology in which by using three liquid crystal display devices having a resolution matrix of from 1280 by 760 to 1920 to 1080, called SXGA, three color images, each of which corresponds to either one of the colors of G, R, and B, are separately formed and then combined together to triple the resolution or to triple the image display frequency (180 Hz) compared with the normal frequency and, by using a time-division method, sequentially display each of the colors of G, R, and B at 60 Hz.

In addition, because throughout the present invention, the above-described eyepiece optical system is configured to be nontelecentric relative to screen 7 to result a good distortion and aberration corrections, the telecentricity condition of the above-described light emitting type two-dimensional image output device having a very small dot size as used in a projector is required to match the telecentricity condition of the above-described eyepiece optical system.

Further, when considering referring to, for example, FIG. 2, the angle which the principal rays of the light beams of ±60 degree field of view angle make with screen 7 when the principal rays, starting from the position of screen 7, reach the lens L5 of the eyepiece optical system is the maximum value of 20 degrees; and thus, assuming that the magnification from the light emitting type two-dimensional image output device to light emitting picture plane G is 3X, a nontelecentric optical system in which each of the light beams emitted from the respective pixels of the light emitting type two-dimensional image output device is emitted with an NA corresponding to 60 degrees, 3-times as compared with the value of 20 degrees, must be provided. This gives rise to a severe condition in designing such an illumination mechanism for the two-dimensional image output device, in view of, for example, the effective illumination angle of a liquid crystal display device or the like.

In view of the above, a method can be conceived in which screen 7 is actually provided at the position of screen 7; light beams emitted from the light emitting type two-dimensional image output device are projected onto the screen via a relay system; and then the back side image having passed through the screen (image light beams which has been diffused by the screen and of which exit NA has become larger) is re-projected onto the retina of the eyeball by the above-described eyepiece optical system. From a prior art standpoint, this method is already proposed in Japanese Unexamined Patent Publication Hei 7-128612 (Patent Literature No. 2); however, no technique for improving such aberrations arising at angles of ±22.5 degrees or more as described earlier is described therein.

As a screen to be used in the embodiment, it is necessary to provide a screen that provides an image to an eyepiece optical system having an inclination of 20 degrees, as a non-telecentric eyepiece lens as described above, and that is a diffusing/transmitting type screen formed by grains smaller than the very small dots of a resolution matrix of from 1280 by 760 to 1920 to 1080.

In the following, a screen satisfying these conditions will be described. As such a screen, a screen made by applying an adhesive over a polyester film of which thickness is uniform and of which surface is smooth and then by, in a clean room, coating the film with abrasive grains of which grain diameter is precisely controlled with micron-grade is used. It should be noted that as the abrasive grains, an oxide or a carbide, such as silicon carbide, chromium oxide, tin oxide, titanium oxide, magnesium oxide, and aluminum oxide, is most suitable; and abrasive grains of uniform diameter of about 0.3 to 40 μm manufactured through a ultraprecision finishing are adopted.

With regard to those materials, the abrasive grains, opaque but uniform, can be multilayered in a random distribution and with a predetermined thickness; the diverging angle can be made equal to or larger than ±60 degrees; even in the case of a DVD or high-definition image, one does not feel a sense of grains; and a field of view angle of ±22.5 degrees or more can be secured.

Additionally, as the size of the abrasive grains, a mesh number can be chosen among from #320 to #15000, and because a tough polyester film is used, the durability becomes high. Further, the screen is desirable also in that it can be manufactured at a low cost. In addition, the thickness of the abrasive grain layer is preferably made to be within the focus depth of the projected image, and it is desirable that the layer is as thin as possible for the purpose of obtaining a sufficient illuminance.

Although when the above-described screen is utilized, there is an effect that a sharp image can be obtained because the diverging angle is wide and, further, the grains on the screen are not recognizable, the light intensity decreases to about a tenth. Accordingly, a device to increase the projection illuminance to compensate the decrease is required. Of course, if a halogen lamp, as used in a projector, is used, a sufficient illuminance can be obtained; however, in view of the appearance of the present invention's devices illustrated later, it is required that in the illumination system, a light source of which size is as small as possible and of which life is as long as possible, for example, a LED, be used.

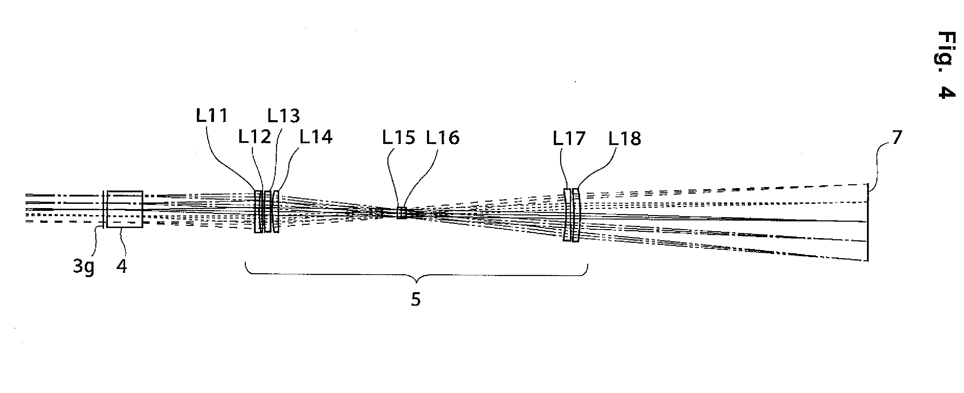

Next, referring to FIG. 4, relay magnification optical system 5 will be described. In FIG. 4, an image formed on two-dimensional liquid crystal devices 3g is, after being color-combined by color beam multiplexing prism 4, projected and imaged on screen 7 by relay magnification optical system 5 constituted by the lens group of L11-L18. The optical design values of this optical system are shown in Table 2.

(Table 2)

| Surface No. | Surface Type | Curvature (mm) | Center Thickness (mm) | Glass Material Code | Lens Diameter (mm) | Separation (mm) |
|---|---|---|---|---|---|---|
| Two-dimensional Liquid Crystal Device Surface (3g) | | | | | | |
| S11 | Plane | INFINITY | | | | 3 |
| <4> | | | 25 | TAFD5_HOYA | 25 | |
| S 12 | Plane | INFINITY | | | | 81 |
| S13 | Sphere | -350 | | | | |
| <L11> | | | 3 | SNPH2_OHARA | | |
| S 14 | Sphere | 185 | | | | |
| | | | | Surface S14 and surface S 15 are cemented to each other. | | |
| S15 | Sphere | 185 | 2 | TAFD30_HOYA | | |
| <L12> | | | | | | |
| S16 | Sphere | -350 | | | | 1 |
| S17 | Sphere | 200 | | | | |
| <L13> | | | 5 | TAFD30_HOYA | | |
| S17 | Sphere | -400 | | | | 1 |
| S18 | Sphere | 90 | | | | |
| <L14> | | | 4 | TAFD30_HOYA | | |
| S19 | Sphere | 180 | | | | 85.5 |
| S20 | Plane | INFINITY | | | | |
| <L15> | | | 3 | SNPH2_OHARA | | |
| S21 | Sphere | 200 | | Surface S21 and surface S22 are cemented to each other. | | |
| S22 | Sphere | 200 | | | | |
| <L16> | | | 3 | TAFD30_HOYA | | |
| S23 | Plane | INFINITY | | | | 114.5 |
| S24 | Sphere | -200 | | | | |
| <L17> | | | 4 | TAFD30_HOYA | | |
| S25 | Sphere | -180 | | | | 1 |
| S26 | Sphere | -400 | | | | |
| <L17> | | | 5 | TAFD30_HOYA | | |
| S27 | Sphere | -200 | | | | 203.39 |

In the optical system, each of the pair of lenses L11 and L 12 and the pair of lenses L15 and L16 is a cemented lens, and by this configuration, chromatic aberration is corrected. In the case of the optical design values shown in Table 2, the optical magnification is 3X.

In the embodiment, the image is observed, with the image being magnified by the eyepiece system, as shown in FIG. 1, and thus, assuming for example that the liquid crystal screen is within a circle of 22.1 mm diameter and that the aspect ratio thereof is 16:9 to calculate the size of the liquid crystal portion, the liquid crystal panel is to have a horizontal size of 19.26 mm and a vertical size of 10.83 mm. In other words, in the case of 1280 pixels, the pixels each have a horizontal size of 19.26 mm/1280=15 $\mu$m and a vertical size of 14.3 $\mu$m; and thus, to resolve this pitch, relay magnification optical system 5 is required to have a resolution of, in terms of pitch, 30 $\mu$m. Since the magnification optical system is a 3X system, an aberration estimation can be implemented by calculating at the best focus position the MTF (which with respect to a image having a predetermined spatial frequency, shows in percentage the (MAX-MIN)/(MAX+MIN) values of the line/space amplitudes when the spatial frequency is varied) of, in terms of frequency, 1000/((15+14.3)/2)/3=22.8Hz. If to improve the MTF, the NA is made small, then, while various aberrations improve, the resolution limit deteriorates. In contrast, if the NA is made large, then the resolution limit improves, and it is also advantageous for obtaining a larger amount of light. However, when the NA is made large, the optical system is significantly affected by, e.g., the spherical aberrations of the lenses, which causes the MTF deteriorate.

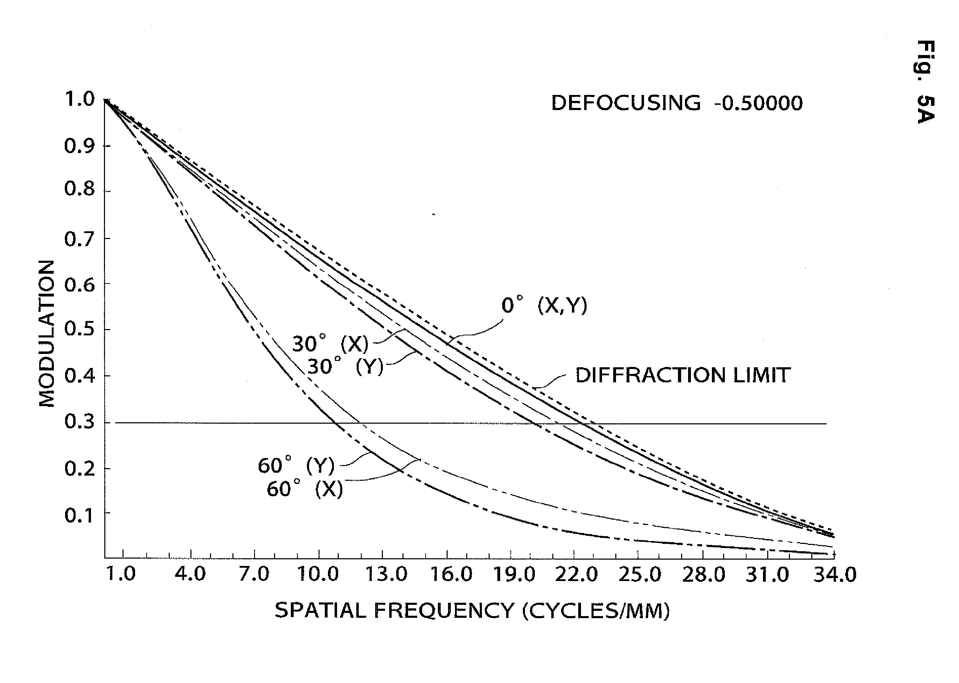

Thus, the optical design is performed, with the NA being set to be 0.03. In FIG 5A are shown the MTFs on an image height-by-image height basis when the focus position is displaced from a position expediently set. The dotted line denotes the resolution limit, and the solid lines denote the MTFs. It can be seen from this drawing that when, as experience shows, assuming that sufficient resolution is obtained at a MTF value of 30% or more, images of up to 20 Hz are resolved at the image heights of 0.0 (0 degree) and 0.5 (30 degrees), and thus a satisfactory optical system of NA=0.03 is realized. While aberrations are present at the image height of 1.0 (60 degrees), a MTF value of 30% is obtained at the targeted frequency of 11.2 Hz.

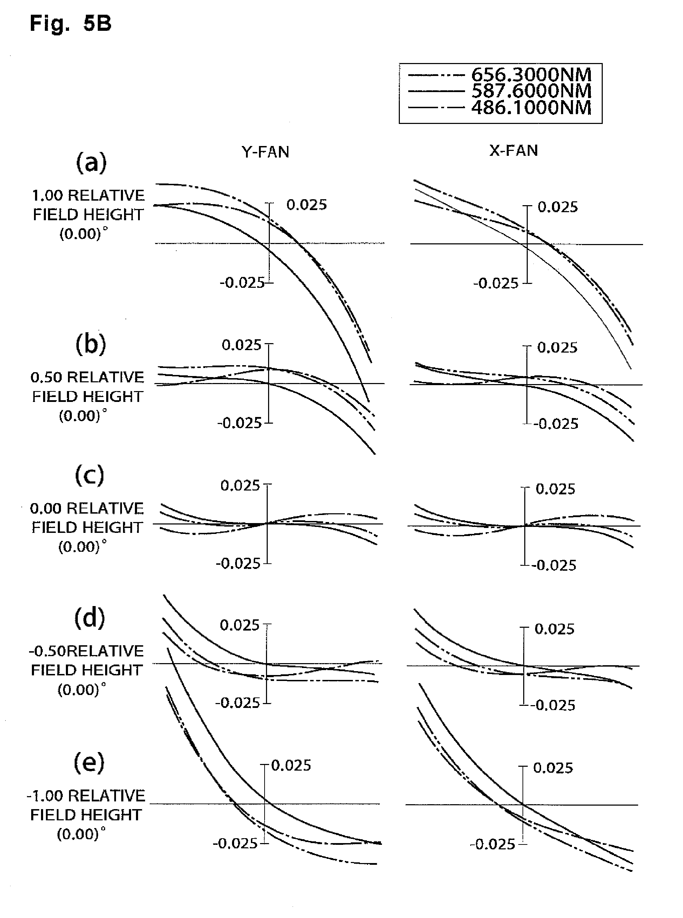

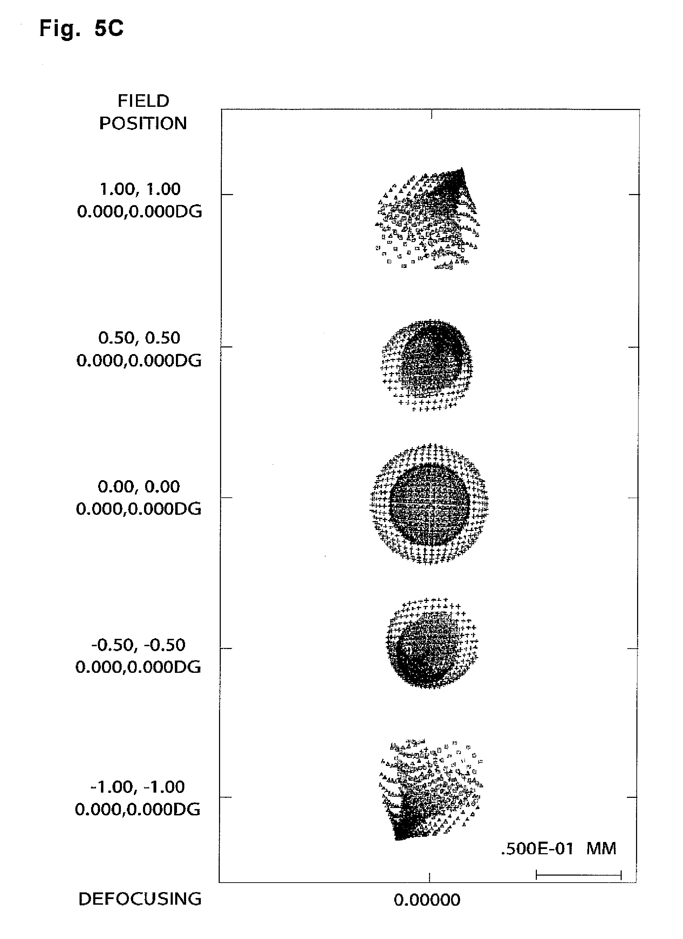

FIG. 5B shows lateral aberration plot output drawings of the optical system, and FIG. 5C shows spot diagrams; and, these drawings also indicate that a good image quality is obtained.

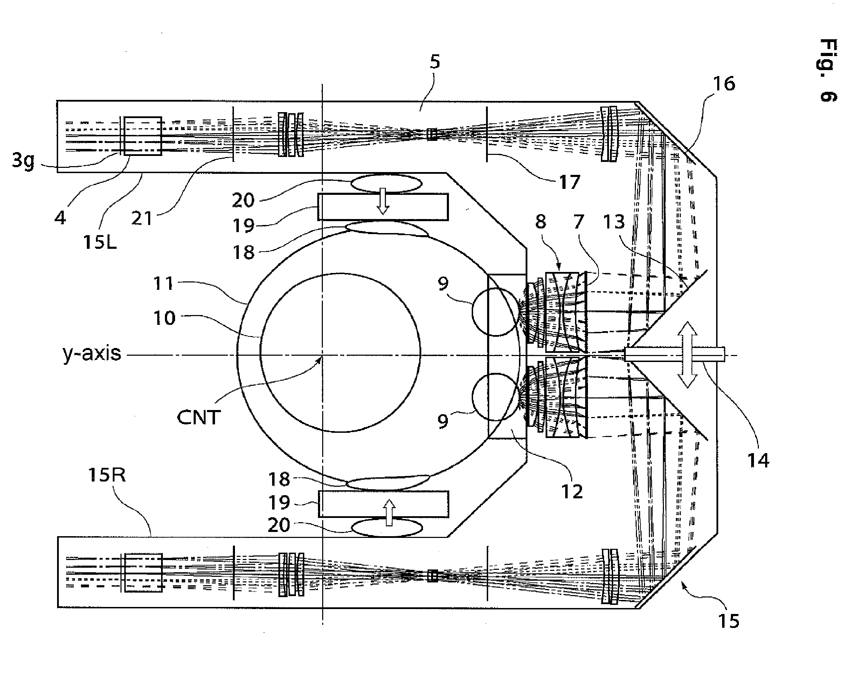

While referring to FIGS. 1-5C, the optical system, which has a field of view angle of ±60 degrees and addresses the look-around eye action, according to an embodiment of the present invention has been described above, next will be described, referring to FIG 6, a configuration example in which two optical systems shown in FIG. 1 are provided and are folded to be adapted for both eyes.

It should be noted first that because the optical systems for both eyes are plane-symmetrical with each other with respect to the plane that includes axis y dividing the human face into the right and left sides and is perpendicular to the plane of the drawing, only the optical system for the left eye will be described here. The light beams having passed through two-dimensional liquid crystal device 3g are directed to eyeball 9 by the optical system, as has been described in connection with FIG. 1; further, in the optical system shown in FIG. 6, with the light beams being deflected by the four mirrors (13, 16, 17, 21) during the traveling process of the beams, left eye image display device 15L and right eye image display device 15R, each having the shape as illustrated, are constructed. In addition, it is configured such that left eye image display device 15L and right eye image display device 15R can be moved in the right and left directions by eye-width adjusting mechanism 14.

More specifically, with respect to the device, like this invention, that projects independent screen images to both eyes by means of eyepiece lenses, distortions occurring on the right side and the left side can be made to follow the same condition by making the optical centers of the eyepiece lenses coincide with the eye centers, and thus, the sense of discomfort and the eyestrain caused when viewing different images with both eyes can be completely removed. However, because the human eye-width differs in individuals, ranging from about 5.5 cm to 7.5 cm, the device structure is configured such that in accordance with the user's eye-width, the distance between the center positions of the light beams incident in the eyes from left eye image display device 15L and right eye image display device 15R can be changed by eye-width adjusting mechanism 14. That is, eye-width adjusting mechanism 14 has a function of being able to change each of the center position of the light beam incident in the left eye from left eye image display device 15L and the center position of the light beam incident in the right eye from right eye image display device 15R, independently of each other, by changing the positions of mirrors 13.

Image display device 15 is provided with sandwiching members 19 functioning as a fixing mechanism that sandwiches ears 18 and also as the earphones for viewing and hearing, and it is designed such that with the face being sandwiched with a predetermined force by elastic members 20, the face and image display device 15 are mutually fixed.

Also, between eyeballs 9 and eyepiece optical system 8 is provided elastic cover 12 for shielding leakage light from the outside and also for preventing eyeballs 9 from coming in contact with eyepiece optical system 8, and the cover not only enhances the sense of realism and absorption, but also functions as a safety mechanism for preventing the eyes from being hurt.

Next, the role of the above-described four mirrors (13, 16, 17, 21) will be explained. While the four mirrors (13, 16, 17, 21) fold the optical system to be accommodated in a small space, they serve an important purpose as well.

In FIG. 6, both of the cross section of the head 11 and the cross section of the neck 10 are illustrated; since the movement of the head is conducted by the neck 10, it can be assumed that the rotational movement center of the head 11 exist within the cross section area of the neck 10. Assuming tentatively that the point is CNT, image display device 15 moves around CNT because the device is fixed to the head 11.

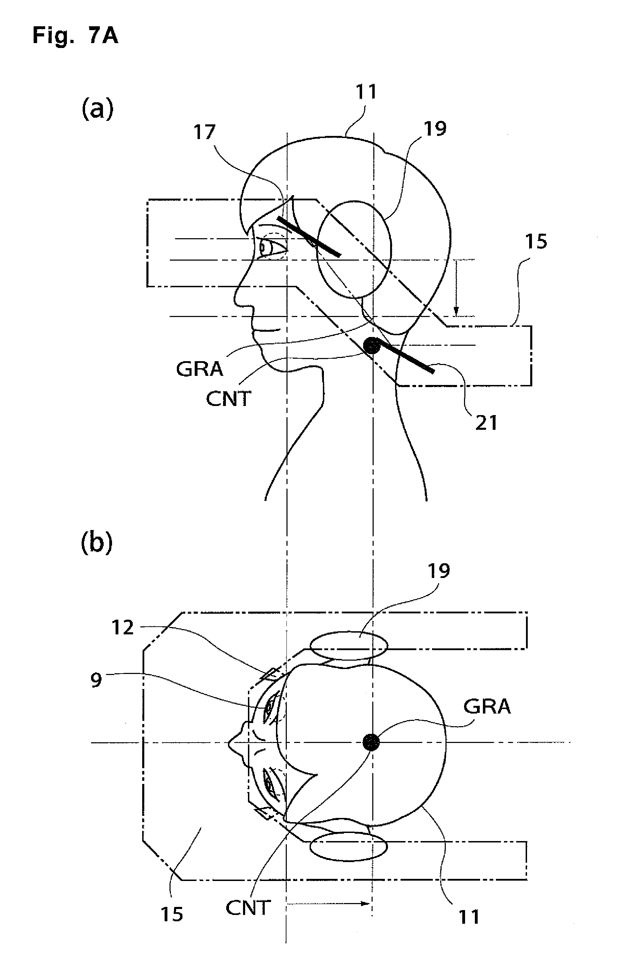

In FIG. 7A are shown schematic drawings illustrating the state in which image display device 15 is worn by a user; and (a) is a side view showing the state, and (b) is a top view. In FIG. 7A, CNT is denoted by a circle filled in with black, and the gravity center position of image display device 15 is denoted by GRA. As can be seen from this layout, mirrors 17 and 21 are used to deflect the light beams in the up and down directions. Because, in a typical layout, the optical elements of the image display device are located mainly ahead of the eyeballs or in the horizontal plane including the eyeballs, the gravity center is also located ahead of the eyeballs and in the horizontal plane including the eyeballs.

In contrast, here, in consideration of the fact that rotational movement center CNT of the head is located within the cross section region of neck 10 and that the height position of neck 10 is lower than that of the eyeballs, ingenuity for locating the gravity center position GRA of image display device 15 as near as possible to rotational movement center CNT of the head, i.e., as shown in FIG. 6, by using mirrors 13 and 16, the light beams are folded to position behind head 11 a portion of relay magnification optical system 5, color beam multiplexing prism 4, two-dimensional liquid crystal device 3g, etc. and thus to shift the gravity center of image display device 15 toward the rear side, and, by using mirrors 17 and 21, the positions of color beam multiplexing prism 4, two-dimensional liquid crystal device 3g, etc. are shifted downward.

More specifically, as can be seen from FIG. 6, objects, as constituent members, that are heavy in weight are eyepiece optical systems 8, sandwiching members 19, and the image forming portions including two-dimensional liquid crystal devices 3g, 3b, and 3r, color beam multiplexing prisms 4, and illumination systems 2g, 2b, and 2r; so, with the light beams being deflected downward by mirrors 17 and 21, the weight of the image forming portions is concentrated downwardly, and thus gravity center position GRA of image display device 15 is made substantially coincide with rotational movement center CNT of the head. Here, as the mirrors, to avoid the occurrence of ghost images, surface reflection type metal mirrors are used.

However, rotational movement center CNT of the head is not, of course, a fixed point, varies depending upon the way of moving the head, and also differs in individuals. The reason that gravity center position GRA of image display device 15 is made substantially coincide with rotational movement center CNT of the head is to, when the head is moved (rotationally moved), make the resistance forces due to the inertia forces, other than the torques, of image display device 15 as small as possible and to make the movement of image display device 15 smoothly follow the movement of the head.

If the misalignment amount between gravity center position GRA of image display device 15 and rotational movement center CNT of the head is large, then the resistance forces which arise, when rotationally moving the head, from the inertia forces, other than the torques, of image display device 15 become large, and thus a big uncomfortable sense of as if the face is pressed is induced when moving the head.

In other words, if there is a large misalignment between rotational movement center CNT of the head and the gravity center position of image display device 15, then, even if the movement of the head stops, image display device 15 does not stop because of the inertia forces and thus does not follow the head well. For this reason, it is configured such that by making gravity center position GRA of image display device 15 and rotational movement center CNT of the head coincide with each other as far as possible, the resistance forces due to the inertia forces, other than the torques, of image display device 15 are made as little as possible.

To achieve such objective, it is configured such that, as shown in FIG. 7A, gravity center position GRA of image display device 15 is, when it is worn by the user, located on the nearer side of the occipital region compared with the eyeballs and on the nearer side of the neck compared with the eyeballs. In this case, assuming that the rotation axes of the head are the X-axis, the Y-axis, and the Z-axis, the intersection point of these axes is rotational movement center CNT. However, because the head does not rotates around a single point, each of the X-axis, the Y-axis, and the Z-axis moves within a given region, and rotational movement center CNT is, for example, in the case of FIG. 6, in a cylinder region having a cross section of neck 10. That is, to make gravity center position GRA of image display device 15 draw closer to CNT means, in other words, "to make gravity center position GRA of image display device 15 located in a rearward and downward direction relative to the eyeball."

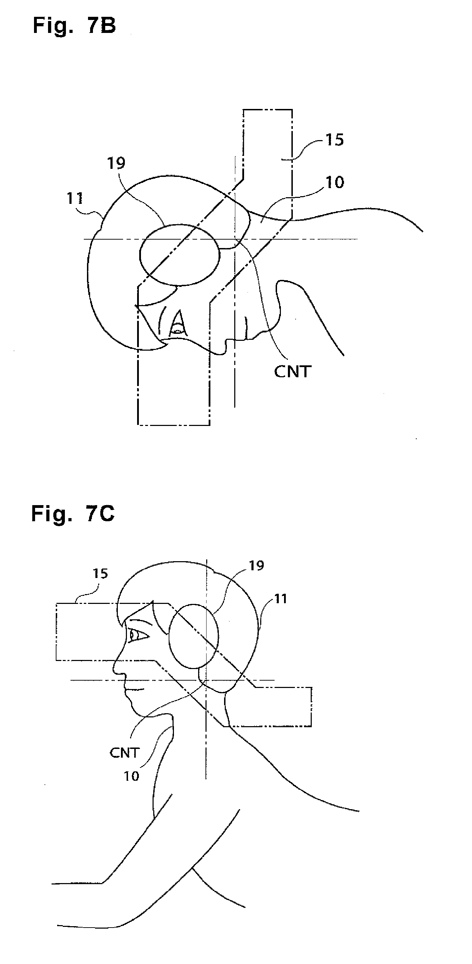

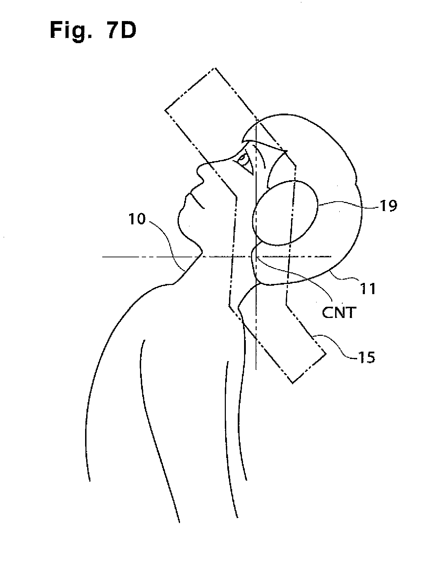

FIGS. 7B-7D show postures taken by a user when looking at given objects; FIG. 7B shows a state when the user is lying; FIG. 7C shows a state when the user is lying on his or her stomach but is lifting his or her face; FIG. 7D shows a state when the user is standing but is looking upward; and thus, image display device 15 may also be used in a manner that it is rotationally moved by about 180 degrees in the up and down direction and, naturally, by about 180 degrees in the right and left direction. The shape of image display device 15 is designed such that it does not touch the user's body even when the user takes such postures.

Further, with regard to game machines and simulation devices also, by, of course, configuring such that image display device 15 follows such movements of the head, a sense of reality and absorption not felt before can be created. It should be noted that in an embodiment of the present invention, around the eyepiece optical systems of image display device 15, which are the portions coming in contact with the head, is provided elastic cover 12 so that the user does not feel a sense of discomfort. Also, on the outer walls of image display device 15 are provided elastic members so that even when the display device strikes the face, there occurs no problem.

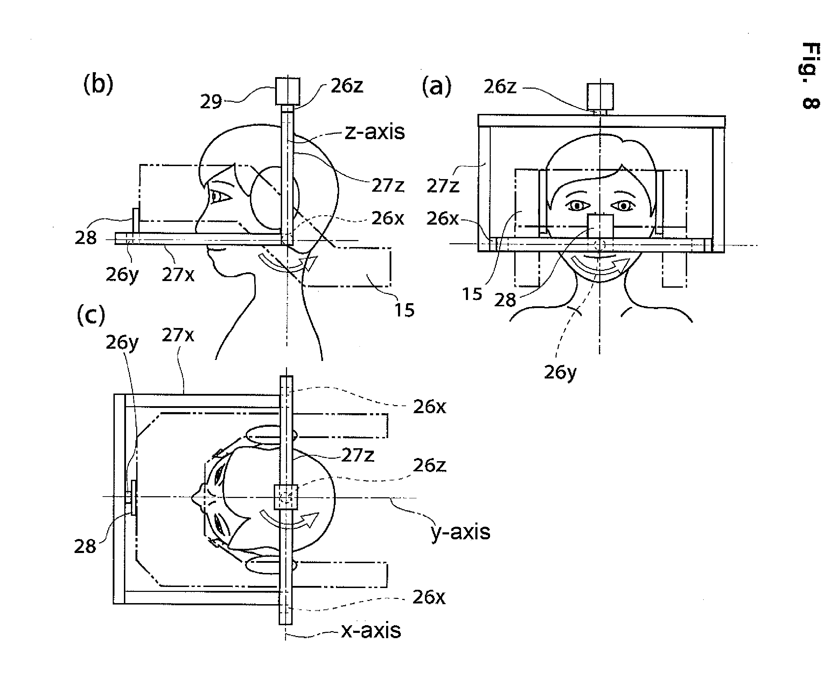

Further, image display device 15 has a weight of about from 1 to 2 kg, it should not be permitted that the user bears such weight. Thus, as an embodiment of the present invention, a mechanism through which the user is not burdened with the weight of image display device 15 is devised, and this mechanism will be described referring to FIG. 8.

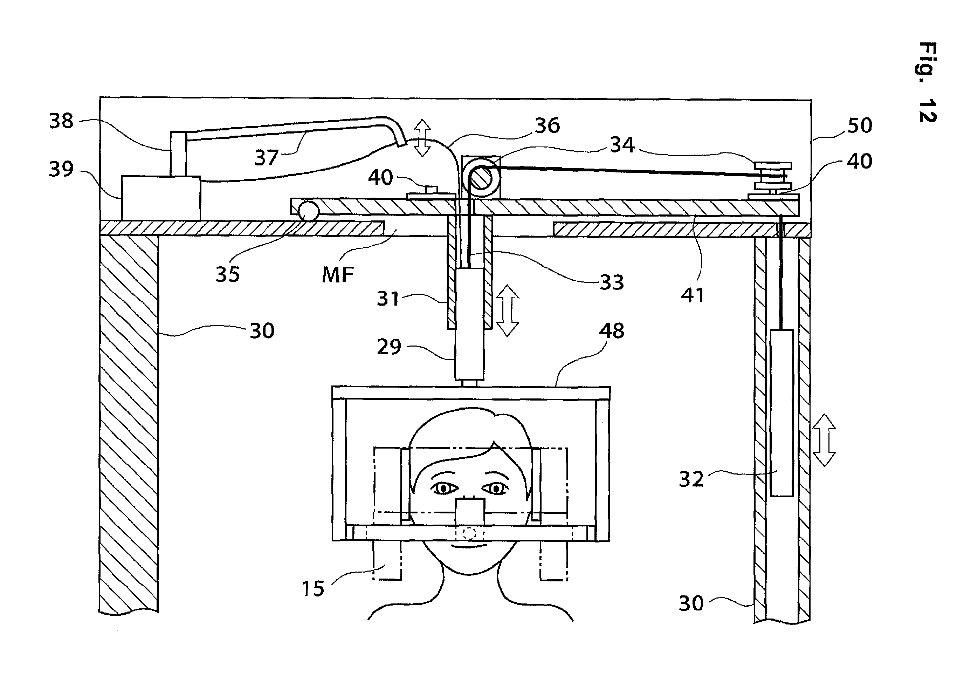

In FIG. 8, (a) is a front view of a supporting mechanism of image display device 15; (b) a side view; (c) a plan view. In FIG. 8, it is configured such that image display device 15 is supported from above by image display device supporting bar 29, and thus the user does not feel the weight of the device. Detailed description of the mechanism will be made later using FIG. 12, but this supporting mechanism's overall operations that correspond to the movements of the head will be described first.

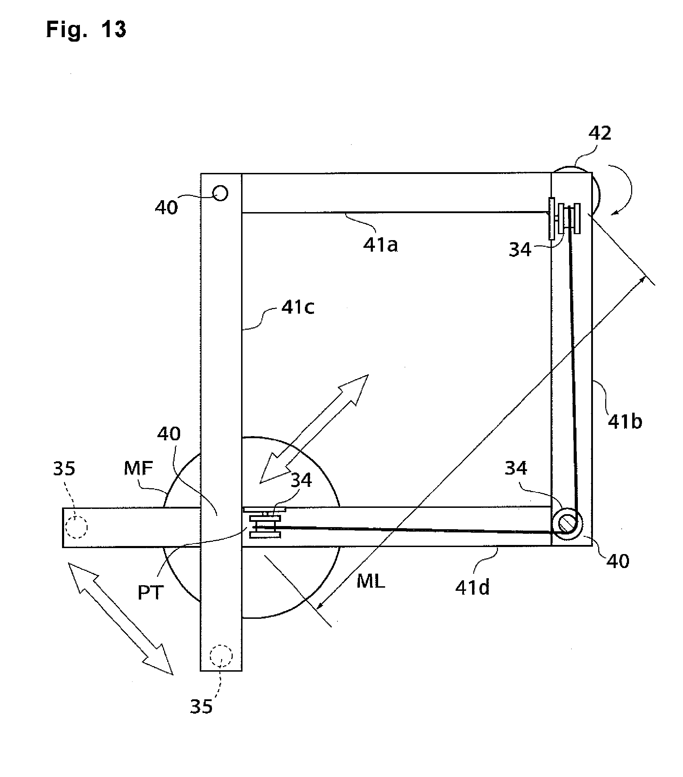

While FIG. 8 shows movable display mechanism 48, which will be described referring to FIGS. 12 and 13, of image display device 15, the z-axis is set in the vertical direction, the x-axis is set in the back and forth direction of the user, the y-axis is set in the right and left direction of the user, each of the axes is denoted by a dashed line. The intersection point of the dashed lines represents gravity center position GRA of image display device 15.

Z-axis rotational unit 27z that is horseshoe-shaped and has three beams which are orthogonal with each other is connected to image display device supporting bar 29 via bearing 26z; and z-axis rotational unit 27z is made rotationally movable around the z-axis relative to the fixed image display device supporting bar 29 shown in FIG. 12. X-axis rotational unit 27x that is horseshoe-shaped and has three beams which are orthogonal with each other is connected to the both ends of z-axis rotational unit 27z via the two bearings 26x and is made rotationally movable around the x-axis relative to z-axis rotational unit 27z.

Extension plate 28 is connected to the center position of x-axis rotational unit 27x via bearing 26y and is made rotationally movable around the y-axis. And, image display device 15 is supported by extension plate 28. And, it is configured such that gravity center position GRA of image display device 15 coincides with the intersection point of the x-axis, the y-axis, and the z-axis. By this, even when x-axis rotational unit 27x, extension plate 28, and/or z-axis rotational unit 27z rotationally move, gravity center position GRA of image display device 15 always coincides with the intersection point of the x-axis, the y-axis, and the z-axis.

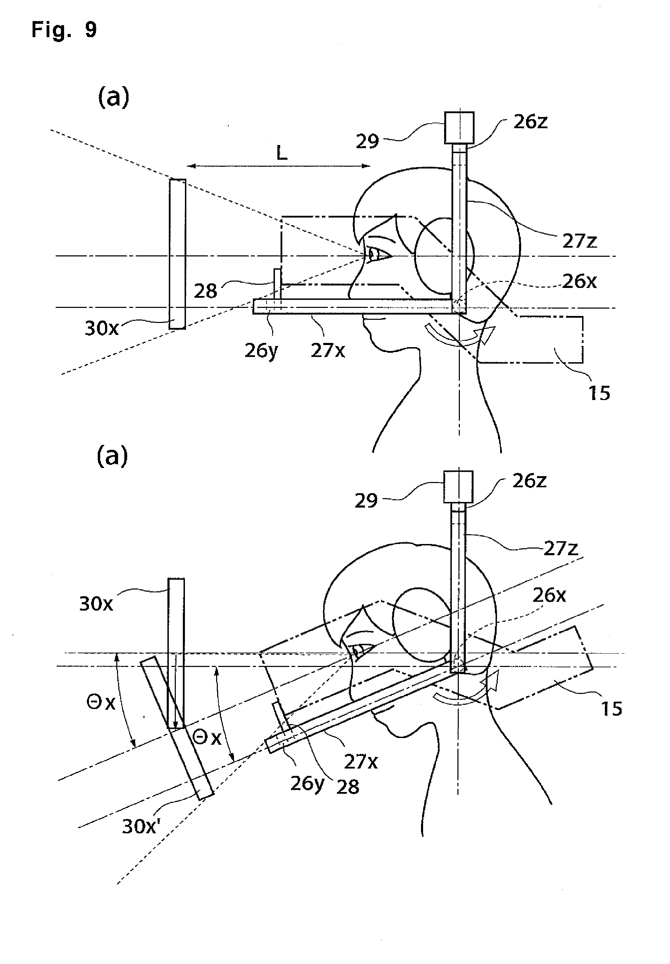

Next, referring to FIGS. 9-11, the manners in which the user actually moves his or her head in the rotational movement directions with image display device 15 being fixed on his or her head will be described. First, the movement around the x-axis will be described. FIG. 9(a) shows the case, in side view, where the user is, in a standing posture in which he or she is observing an image on orthogonal field 30x separated from him or her by L, looking at a graphic image through image display device 15. FIG. 9(b) is a drawing showing the state in which the user has looked down by an angle of θx degrees compared with the state of FIG. 9(a). Since image display device 15 is fixed to the user, the rotational angle θx is measured by a rotary encoder attached to bearings 26x. An image display controller, not shown, acquires this rotational angle θx, performs an arithmetical operation so that orthogonal field 30x' of which image center is located in the direction of rotational angle θx, with its rotation center being the user's eye, and is located at a position separated from him or her by L is outputted, and displays an output image corresponding to orthogonal field 30x' on image display device 15. By this, the user can, through image display device 15, observe the same image as is actually viewed by his or her eyes.

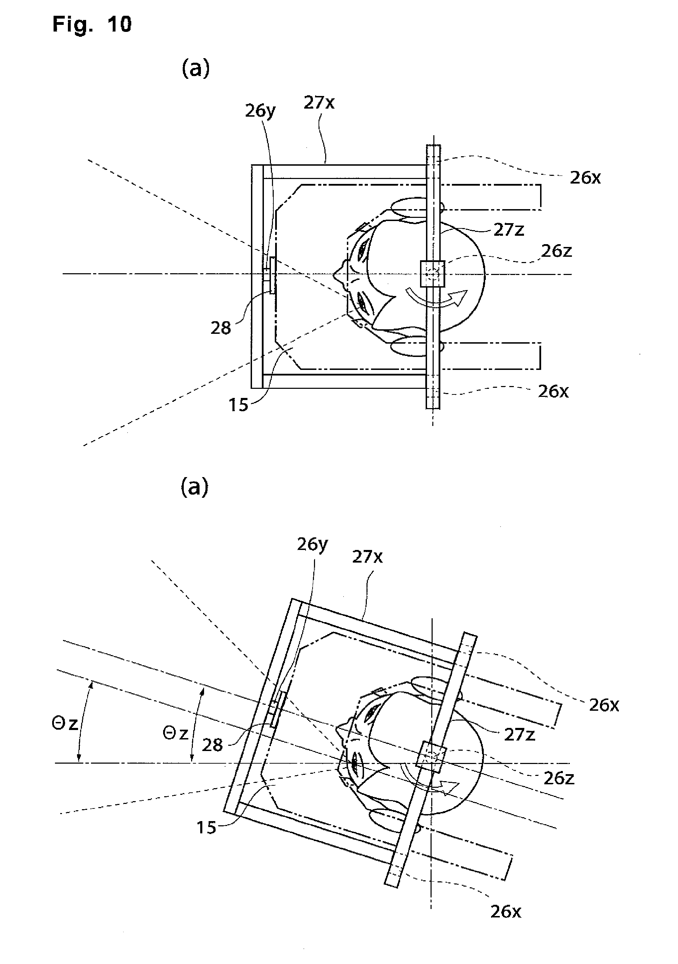

Next, the movement around the z-axis will be described. FIG. 10(a) shows the state in which the user is facing forward; FIG. 10(b) is a top view showing the state in which the user has turned his or her head in the right direction by an angle of θz degrees compared with the state of FIG. 10(a). Since image display device 15 is fixed to the user, the rotational angle θz is measured by a rotary encoder attached to bearing 26z. The image display controller, not shown, acquires this rotational angle θz, performs an arithmetical operation so that an orthogonal field of which image center is located in the direction of rotational angle θz, with its rotation center being the user's eye, and is located at a position separated from him or her by L is outputted, and displays a corresponding output image on image display device 15. By this, the user can, through image display device 15, observe the same image as is actually viewed by his or her eyes.

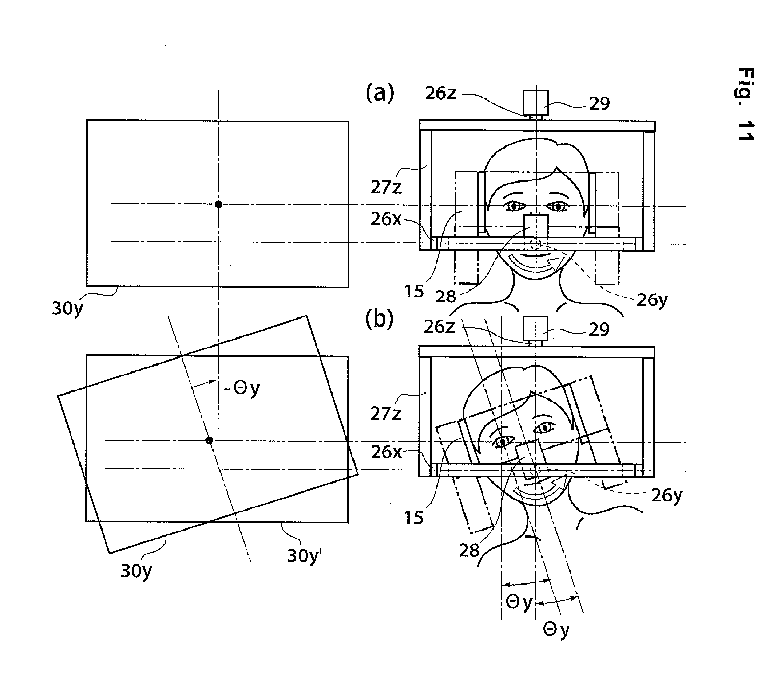

Description of the movement around the y-axis will follow. FIG. 11 is a front view showing a state in which the user is standing and is observing an image on orthogonal field 30y separated from him or her by L, but orthogonal field 30y is illustrated for the sake of simplicity, with it being displaced in the right side direction, for the observed orthogonal field 30y would otherwise overlap with the other things on the drawing. FIG. 11(a) shows the state in which the user is facing forward; FIG. 11(b) shows the state in which the user has inclined his or her head in the right direction by an angle of θy degrees compared with the state of FIG. 11(a). Since image display device 15 is fixed to the user, the rotational angle θy is measured by a rotary encoder attached to bearing 26y. In this case, orthogonal field 30y also inclines together with the head by the rotational angle θy. The image display controller, not shown, acquires this rotational angle θy, performs an arithmetical operation so that orthogonal field 30y' of which image center is located in the direction opposite to the direction of rotational angle θy, with its rotation center being the user's eye, and is located at a position separated from him or her by L is outputted, and displays an output image corresponding to orthogonal field 30y' on image display device 15. By this, the user can, through image display device 15, observe the same image as is actually viewed by his or her eyes.

As described above, since in the embodiment described referring to FIGS. 9-11, the three axes of xyz that run through gravity center GRA of image display device 15 are respectively provided with bearings 26x, bearing 26y, and 26z and since the position of rotational movement center CNT when the user moves his or her head and the position of gravity center GRA are made near to each other, the inertia forces of image display device 15, other than the torques, become small, which makes it possible to make image display device 15 smoothly follow the movements of the head. Thus, the user can, virtually without being conscious of the existence of image display device 15, obtain a high sense of reality and absorption.

In the following, a control mechanism which is provided above image display device supporting bar 29, supports the weight of the entire supporting mechanism of image display device 15, and makes the user unaware of the weight will be described referring to FIGS. 12 and 13.

In FIG. 12, the entirety of the supporting mechanism, which supports image display device 15, is held by image display device supporting bar 29, and image display device supporting bar 29 is suspended by string-like flexible member 33. String-like flexible member 33 connects, via pulleys 34 placed on xy-surface movement magic surface mechanism (35, 40, 41, 42) on base mechanism 30, counterweight 32 up-and-down movably provided in a hollow space in the column portion of base mechanism 30 and image display device supporting bar 29. The weight of counterweight 32 is designed to be substantially equal to the total weight of image display device supporting bar 29, the entire supporting mechanism, and image display device 15; and the movement of this system stops at any position through the friction forces of pulleys 34, etc. By virtue of this mechanism, the user does not feel the weight of image display device 15 and, further, can smoothly move his or her head up and down.

It should be noted that in image display device 15 are provided earphones, two-dimensional liquid crystal devices, illumination systems, and encoders, and thus wirings for control and power supply are necessarily required. An aerial power transmission system may be applied; however, in the embodiment of the present invention, by providing spaces through which such wirings can pass in the center hollow portions of the above-described bearings, the wiring arrangement from image display device 15, via x-axis rotational unit 27x and z-axis rotational unit 27z (see FIG. 8), to image display device supporting bar 29 is achieved. The wirings consist of a wiring for video (wiring for D3 ports or video ports for PC), a wiring for the earphones, an output wiring, and a wiring for 5-10V power sources, produce only the torsional forces around the rotational axis centers, and thus produce only a moderate load.

Further, those wirings 36 are suspended, in supporting bar up-and-down drive purpose guide 31, by a fishing rod-like suspension device (37, 38) and thus are designed so that they do not produce a load also during the up-and-down movements of image display device supporting bar 29. Those wirings 36 are connected to image processing device 39, and it is configured such that the information having experienced image and audio processings in the image processing device is outputted on image display device 15.

Further, while supporting bar up-and-down drive purpose guide 31 is fixed on magic hand bar 41 and guides the up-and-down movements of image display device supporting bar 29, a smooth operation of the up-and-down movements is realized through rollers, an air guide, or the like. Xy-surface movement magic surface mechanism (35, 40, 41, 42) is designed such that it can freely move, with fixed bearing 42 (see FIG. 13) being its rotational movement center, within the space indicated as MF. Without this supporting bar up-and-down drive purpose guide 31, xy-movement of image display device 15 would occur when string-like flexible member 33 inclines relative to image display device supporting bar 29 in a state that xy-surface movement magic surface mechanism (35, 40, 41,42) does not move because of friction forces.

More specifically, when the inclination between image display device supporting bar 29 and string-like flexible member 33 reaches the limit, xy-surface movement magic surface mechanism (35, 40, 41, 42) exceeds in power the friction forces and suddenly moves. Then, the inclination between image display device supporting bar 29 and string-like flexible member 33 relaxes, and a force that drives image display device 15 in the xy-directions will be generated. The sense induced by this process creates a big sense of discomfort for the user.

In order to prevent the occurrence of such problems, it is configured such that by providing supporting bar up-and-down drive purpose guide 31, it is controlled such that such an inclination between image display device supporting bar 29 and string-like flexible member 33 does not occur and is configured such that xy-surface movement magic surface mechanism (35, 40, 41, 42) moves in response to the xy-movements of the head. For this purpose, xy-surface movement magic surface mechanism (35, 40, 41, 42) is required to move in the xy-directions as smoothly as possible. Next, referring to FIG. 13, the mechanism of xy-surface movement magic surface mechanism (35, 40, 41, 42) will be described.

FIG. 13 is a plan view of xy-surface movement magic surface mechanism (35, 40, 41, 42). Base mechanism 30 and the two magic hand bars 41a and 41b are rotational-movably connected by fixed bearing 42; with respect to each of the paired magic hand bars 41a and 41c, the paired magic hand bars 41b and 4 1 d, and the paired magic hand bars 41c and 41d (those magic hand bars are illustrated in FIG. 13 with reference symbol 41 and are, in some cases, collectively referred to as 41), the paired magic hands are rotational-movably connected with each other at their respective intersection point portions, thereby constituting a pantograph mechanism.

In other words, it is designed such that, like a magic hand, with the portion of fixed bearing 42 being set as an axis, fall point PT of string-like flexible member 33 can linearly move and rotationally move in the directions of the arrows within the movement space MF.

Further, each of the pulleys is fixed on each of three positions on magic hand bar 41; with those pulleys being positioned such that the lengths of the portions between the pulleys along which string-like flexible member 33 is linearly stretched do not change also when the magic hand portion stretches or shortens, the magic hand portion can smoothly stretches or shortens or contracts. Further, because the magic hand portion is rotational-movably supported by fixed bearing 42 and is, at the same time, movably, in the xy-directions, supported on base mechanism 30 through spherical rollers 35, each provided on each of the end portions of magic hand bars 41 c and 41d, magic hand bar 41 itself is not required to have a high rigidity and thus can be made light in weight.

Still further, with the movement space MF being set such that the magic hand can move, starting from its initial state, i.e., the position where its stretching or shortening movement is least resisted and where the respective magic hand portions orthogonally cross each other, up to the given limit positions of stretching or shortening and with distance ML between fixed bearing 42 and fall point PT being set to be sufficiently long, it is devised such that the friction forces during the xy-movements of xy-surface movement magic surface mechanism (35, 40, 41, 42) are made small.

In the following, with regard to examples of game machines and simulation devices using image display device 15, their entire configurations will be described. In the following figures, the entire device will be described by dividing it into the following three groups: base mechanism 30 (a portion that supports movable display mechanism 48 including image display device 15), control mechanism storage portion 50 (a portion that enable the XYZ-movements of the movable display mechanism), and movable display mechanism 48 (a portion that enable the $\theta x$-, $\theta y$-, and $\theta z$-movements and image output, audio output, and posture information input portions).

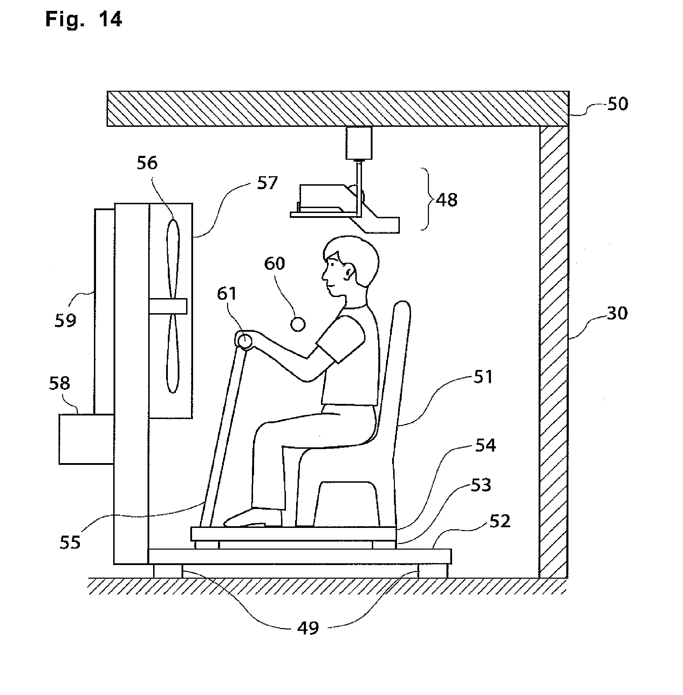

FIG. 14 shows a most basic device configuration example of a game machine; and this game machine is for viewing images presented on movable display mechanism 48, by operating control unit 61 in a posture of sitting. In addition to the above-mentioned base mechanism 30, control mechanism storage portion 50, and movable display mechanism 48, in the machine are provided three portions: a user supporting mechanism (49, 51, 52, 53, 54, 60), an operation mechanism (55, 61), and a sense of reality enhancing device (56, 57, 58, 59).

In the user supporting mechanism (49, 51, 52, 53, 54, 60), $Z/\theta x$ drive mechanism 49 that moves the user in the Z-direction and $\theta x$-direction supports $Z/\theta x$ drive base 52; $Z/\theta x$ drive base 52 supports, via $\theta y$ drive mechanism 53 that moves the user in the $\theta y$-direction, virtual drive base 54. On virtual drive base 54 are supported chair 51 and operation support bar 55; operation support bar 55 is provided with control unit 61. The user's body is supported, through his or her feet and buttocks, on chair 51 and virtual drive base 54; and the user can, by holding control unit 61 with his or her hands, stably put his or her weight on the supporting mechanism. In addition, as means for preventing the situation in which during the use of the machine, the user becomes sick and collapses, stopper 60 that supports the body in the collapsing direction, a seatbelt, etc. are provided on virtual drive base 54.

On the other hand, to operation support bar 55 of the operation mechanism (55, 61) is attached a motorcycle-type handlebar; on the right side portion thereof is attached a revolving type accelerator, and on the left side portion thereof is attached a grip type brake; and, by operating the accelerator and the brake, the user can adjust the speed during virtual driving. Further, when the user turns the handlebar to the right, $\theta y$ drive mechanism 53 inclines virtual drive base 54 slightly in the right direction, which causes a sense of, like a motorcycle, naturally turning to the right in concert with the image. Further, there are a few kinds of buttons in positions which the thumbs of both hands can access; these buttons include an emergency button for resetting the machine (i.e., for returning the inclination, etc. to the original state and for making the image in OFF state) and instruction buttons for conducting some operations on the image.

As the sense of reality enhancing device (56, 57, 58, 59), air blowing mechanism 56 that resembles an electric fan and the air blowing mechanism's cover 57 are positioned ahead of the user, and it is controlled such that the air blowing amount is varied in accordance with the movement speed of virtual drive base 54 in the screen image. Further, temperature control mechanism 59 that controls the air blowing temperature in accordance with the environmental condition assumed under the graphics in the screen image and fragrance varying mechanism 58 that controls the fragrance during the air blowing are positioned on the back face of air blowing mechanism 56, and it is controlled such that the user is given a high sense of reality.

In particular, because this game machine has a field of view angle of 120 degrees and because visual information and auditory information from the outside world are cut off by elastic cover 12 (see FIG. 6) and the earphones of given volume, there is prepared a condition in which VE sickness is apt to occur because of the high sense of reality. However, this game machine is provided with the above-described drive mechanisms of virtual drive base 54, air blowing mechanism 56, etc., and thus, through the working of these mechanisms, etc., the conditions of semicircular canals can be approximated, in the sensing and tactile aspects, to the real world conditions. Thus, because of this effect and because of the fact that the game machine provides images at the infinite distance, the frequency of VE sickness occurrence can be considerably decreased.

In addition, in contrast to the ordinary bicycles and motorcycles, virtual drive base 54 is, assuming that it should be a future movement system, set to be a mechanism that provides a sense of floating in the air. For this reason, virtual drive base 54 does not follow irregularities seen in the image, and virtual drive base 54 itself is not given vibrations. Further, also when climbing down a cliff or climbing a steep cliff, a technique in which virtual drive base 54 is inclined by a given amount by $Z/\theta x$ drive mechanism 49 is adopted, intending to secure an appropriate field of view. By performing the control that does not follow small movements in this manner, there are no rapid movements of the head caused by high-frequency movements of virtual drive base 54, and thus image display device 15 completely follows the movements of the head. (Image display device 15 is capable of addressing low-frequency movements.) Accordingly, vibrations of the image due to positional differences between image display device 15 and the head are also reduced, which prevents VE sickness.

It may be generally thought that the higher the sense of reality becomes, the more easily VE sickness occurs; however, since in this game machine, as described above, differences between the image and somesthesis due to high-frequencies are reduced, differences between the image and somesthesis due to low-frequencies are eliminated, and, at the same time, in consideration of the fact that by winding down a car window, VE sickness can be alleviated, air blowing is performed in accordance with the virtual speed, the sense of reality and absorption can be maintained, and, at the same time, VE sickness can be alleviated.

As described above, the game machine is designed on the assumption that it should be a future movement system, and thus it can simulate any things. Thus, when the game machine is used for simulating a vehicle of which movement course is predetermined, e.g., a jet coaster or a train, the handlebar of the operation mechanism (55, 61) is fixed, and the accelerator and the brake are not provided except in the case of a train. Since in accordance with the conditions of images which are coupled with head movement information and are outputted by a control system, the sound, the sense of reality enhancing device, and the behavior of the virtual drive base 54 are controlled in concert with each other, the game machine can be, as a mechanism for enjoying the sense of reality created thereby, optimized for its intended use.

Further, with regard to, among game machines, a race in which a desired course can be selected or a course guide in which a desired route can be followed by selecting from predetermined routes, because operation mechanism (55, 61) is provided with the handlebar, the accelerator, the brake, etc., and because under the selected condition, the image, the sound, the sense of reality enhancing device, and the behavior of the virtual drive base 54 are controlled in concert with each other, the game machine can be, as a mechanism for enjoying light-heartedly the sense of absorption created thereby, optimized for its intended use.

Next, referring to FIGS. 14-16, there will be described a method how to use the game machine described above. FIG. 14 shows the state in which the user is sitting on the chair of the game machine; first, the user fixes himself or herself on virtual drive base 54 by use of stopper 60, a safety device, the seatbelt, etc. and then pulls down movable display mechanism 48 existing above to attach it to his or her head. During this process, the user adjusts image display device 15 by moving eyepiece optical systems 8 in the back or forth direction by using eye-width adjusting mechanism 14 and a focusing mechanism that are provided in image display device 15 so that three-dimensional images look natural to both eyes without eyeglasses (see FIG. 6).

A preparatory sequence is set in which the user subsequently turns his or her head in various directions to see if image information moves in accordance with the head movement and then sees if the emergency button for resetting the machine (i.e., for returning the inclination, etc. to the original state and for making the image in OFF state) and the instruction buttons for conducting some operations on the image function well, and if so, the use of the devise will be initiated.

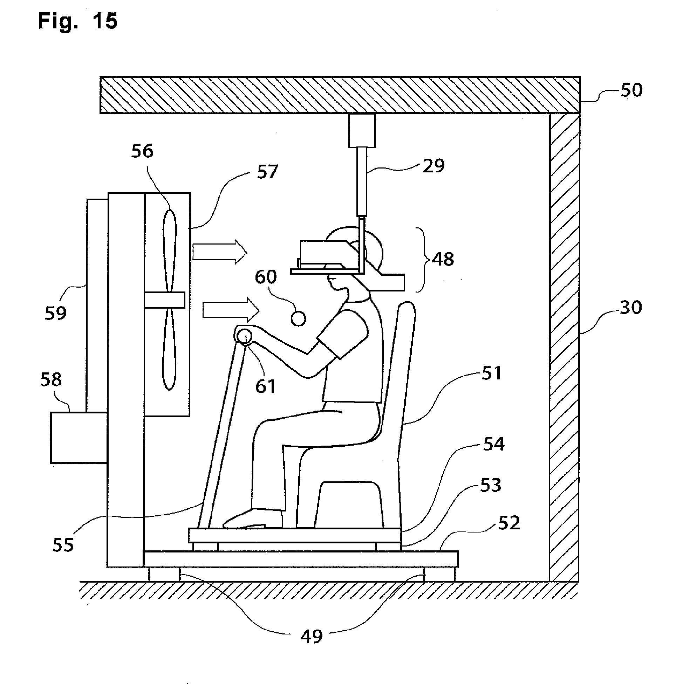

FIG 15 shows a state in which the user is using the game machine; the air blowing from air blowing mechanism 56 is directed to the upper body. In order to effectively receive the wind, it is configured such that there is not any large obstacle between air blowing mechanism 56 and the user.

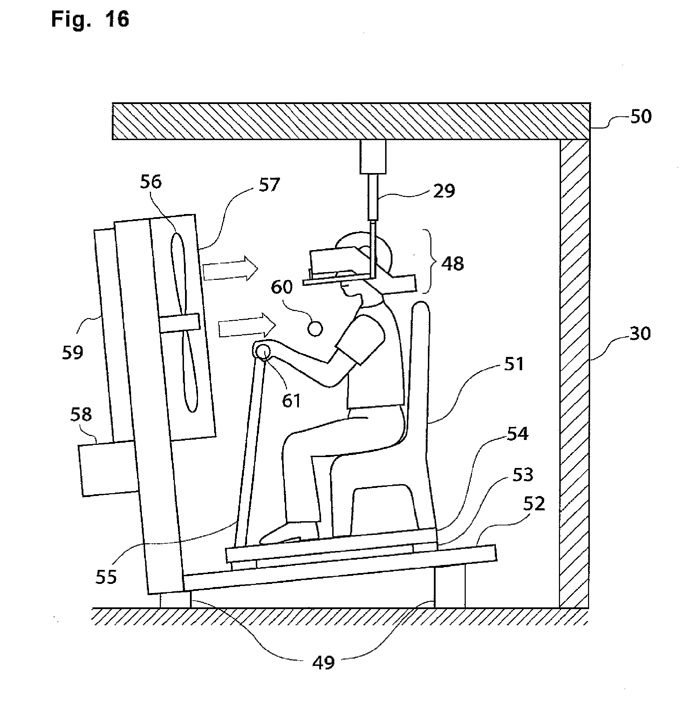

FIG. 16 shows a state in which the user is climbing down a virtual steep cliff on the image; the direction of the wind has changed to be that of from below; virtual drive base 54 has been greatly inclined toward the front direction by Z/θx drive mechanism 49. In FIG. 16, the rear side member is illustrated as having increased in length; however, because the user falls, in fact, toward the front direction, the sense of reality would be more increased by fixing the rear side height and lowering the front side portion.

While the above-described game machine is used by the user in a state of sitting, this machine can also be applied to, for example, in addition to for game purposes, a virtual guide of which objective is sightseeing in an inaccessible place (e.g., a sightseeing spot, a foreign country, an inaccessible area, a dangerous area, an underwater area, or outer space) and to a search system in which by dispatching a robot on which a video camera is mounted to a predetermined region (an inaccessible area, a dangerous area, a microspace, or outer space) and by linking the movement of the robot with the operation of operation mechanism (55, 61), predetermined area traveling and image observation are realized.

Further, in this field, there are many unresolved issues of which related correlations have not yet been elucidated: for example, simulations of VE sickness, discrepancies between things sensed by semicircular canals and things felt through images, and the reason why one feels sick when viewing three-dimensional images represented with a parallax different from a natural one. In the present invention, also for the purposes of simulating such issues, base mechanism 30, control mechanism storage portion 50, movable display mechanism 48, user supporting mechanism (49, 51, 52, 53, 54, 60), operation mechanism (55, 61), .and, further, sense of reality enhancing device (56, 57, 58, 59) can be provided completely independently of each other, and thus various applications addressing a wide variety of uses can be realized.

Further, as exercises done in a state of sitting, exercises done by using foot and hand, e.g., a bicycle exercise and a boat exercise, can be listed. In a gym or the like, the user is likely to get tired of doing the exercises because these exercises are monotonous ones. Since the exercises do not involve rapid movements of the head, by applying the present invention to the exercises, the user can always see the progress status in accordance with the pedaling or rowing speed and amount. Further, since the air blowing mechanism is also provided, the sense of reality is increased, an antiperspirant effect is obtained, and thus the user can do the workouts comfortably. It should be noted that when applying the game machine to such workouts, it is preferable that the contact area of sandwiching members 19 is made smaller and that a glass cleaning mechanism that with thin glasses being inserted between the eyepiece lens systems and the eyeballs, wipes out the sweat on the thin glasses which have clouded over with sweat (a mechanism in which with the glasses being pulled out and pulled in, the surfaces thereof are wiped up), defogging glasses, an air blowing mechanism, etc. are introduced.

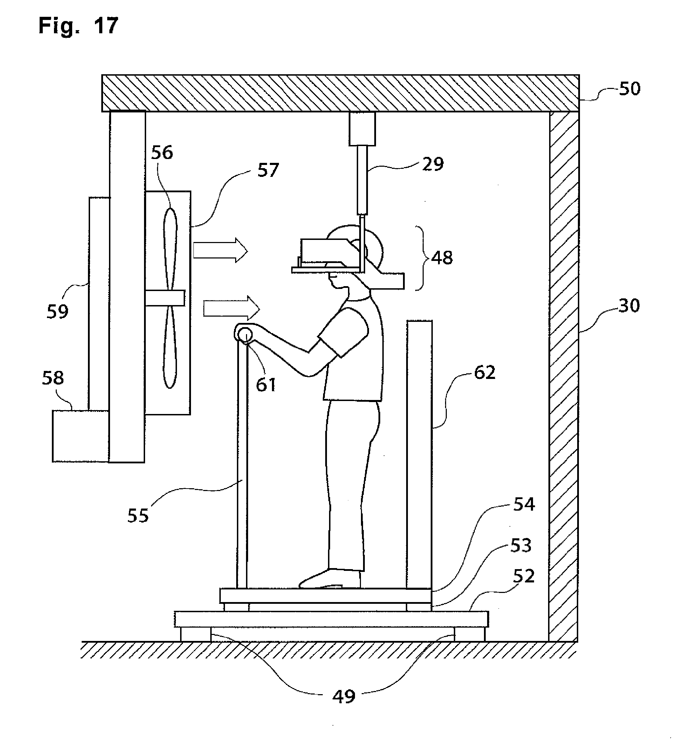

FIG. 17 shows the configuration of a game machine, an embodiment example of the present invention, that is used in a state of standing. With regard to base mechanism 30, control mechanism storage portion 50, movable display mechanism 48, operation mechanism (55, 61), and sense of reality enhancing device (56, 57, 58, 59), mechanisms that are substantially the same as those shown in FIG. 14 can be used. With regard to user supporting mechanism (49, 52, 53, 54, 62), stopper 62 for preventing the user from falling toward the rear direction is newly provided instead of chair 51. Among virtual guides of which objective is sightseeing in an inaccessible place, a casually-usable virtual guide intended for a sightseeing spot, a foreign country, or a virtual space is suitable for this game machine, which is used in a state of standing. The user supporting mechanism (49, 52, 53, 54, 62) is hardly subjected to control; and, the game machine effectively works in the case where the user desires to purely enjoy only the image of the place in a short time.

Further, since walking machines and up-and-down moving machines (stair climbing instrument) set in a gym involve relatively small movements of the head, the user can always see the progress status, as described above. Further, since the air blowing mechanism is also provided, the sense of reality is increased, an antiperspirant effect is obtained, and thus the effect that the user can do the workouts comfortably is produced.

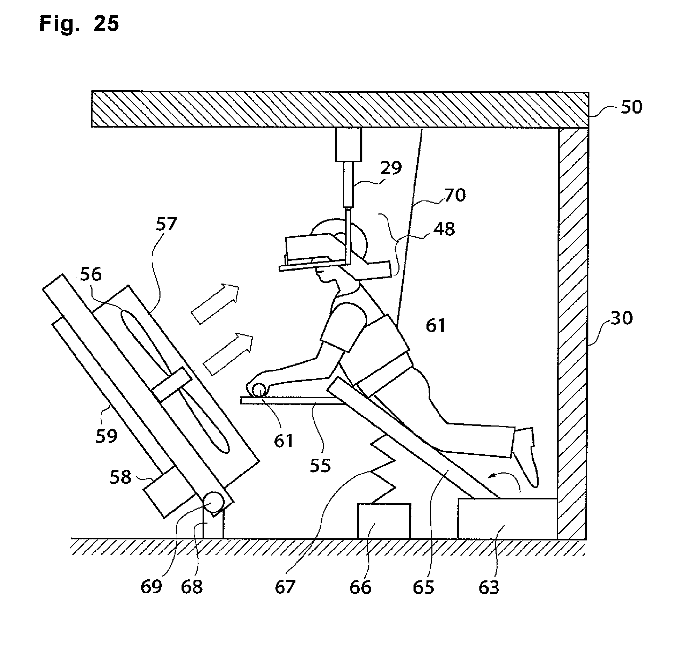

FIG. 25 shows a game machine example enjoyed in a state of lying. In contrast to the game machines shown in FIGS. 14 and 17, in this game machine, first body supporting mechanism (70) is attached to the user in a state of standing, and θx drive device (63, 65) that lays down the body starting from the state of standing, second body supporting mechanism (66, 67) that supports, together with the first body supporting mechanism (70), the weight of the user and controls the body posture, etc., and control mechanism (55, 61) that is operated by moving the body in the up-and-down directions are provided. This is a game machine envisaging hang gliding, bungee jumping, underwater walking, space walking, etc.; with the body being supported by the two body supporting mechanisms, the game machine becomes a safe one, and the weight supporting area is broadened; with the air blowing direction being made variable by air blowing varying mechanism (68, 69), the sense of reality of being floated is enhanced; and with the body being laid down starting from the state of standing, with a field of vision of 120 degrees being covered, and with the air blowing being conducted, an unprecedented sense of reality and exhilarating can be enjoyed.

The present inventor proposes that, in a simulation device for amusement purposes, a high-definition image be displayed as a background image, and an image formed by a computer be displayed, being superimposed on the background image. Images formed by a computer consist of an image automatically created by a program (e.g., a target to be shot) and an image created in accordance with input information inputted by a user through an operating portion (e.g., a gun sight).

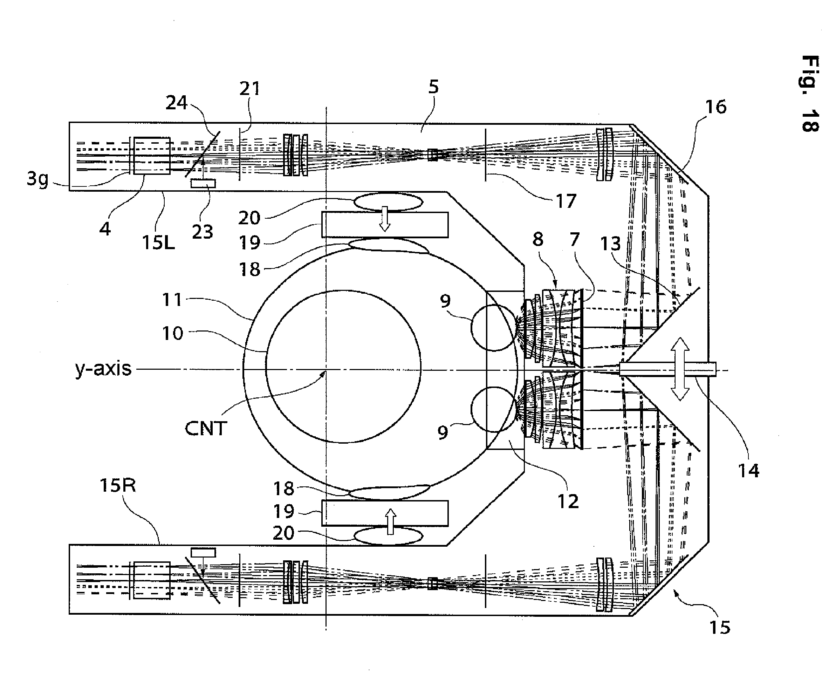

FIG. 18 shows an outline of an optical system that optically combines a high-definition image and an image formed by a computer. Because this optical system is basically the same as that shown in FIG. 6, the same constituent elements as those in FIG. 6 are denoted by the same reference numerals, and description thereof will be omitted. The optical system shown in FIG. 18 differs from the optical system shown in FIG. 6 in that in the optical system shown in FIG. 18, a second two-dimensional liquid crystal device 23 and half mirror 24 are provided.

While two-dimensional liquid crystal device 23 is illustrated in a simplified manner, it has a three colors multiplexing function as shown in FIG. 1. On two-dimensional liquid crystal device 3g, shown also in FIG. 1, and on two-dimensional liquid crystal device 3b and 3r, not shown in FIG. 18, is displayed the high-definition image; and the high-definition image, via color beam multiplexing prism 4, is incident in half mirror 24 and passes through it. The image formed by a computer is displayed on two-dimensional liquid crystal device 23, is incident on half mirror 24, is reflected by it, and thus is combined with the high-definition image. The combined light beam is incident in the zoom optical system and projected into the eyeball, as described in connection with FIG. 1.

In this case, by making the high-definition image in a state of being cut out in the area where the high-definition image and the image formed by a computer overlap with each other, an effect that the image formed by a computer comes to the front, and that the high-definition image is hidden behind the image formed by a computer can be produced. This can be realized by a well-known technique.

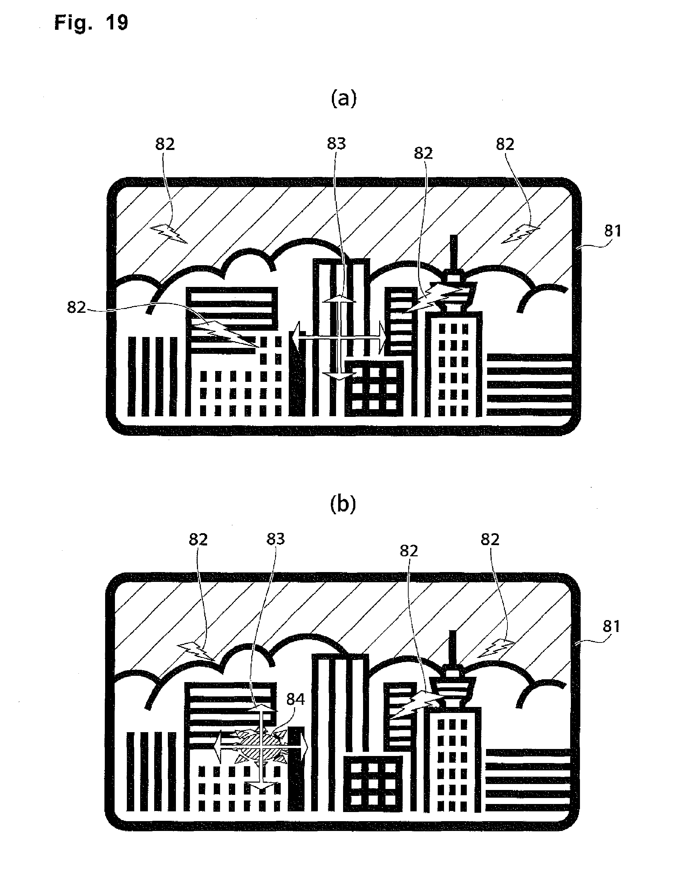

FIG 19 shows an image example combined in this way. In display screen 81 is projected the high-definition image as a background image, and in the background image are displayed targets 82 and gun sight 83, images formed by a computer. Targets 82 are created based on a program in the computer and move in the screen in accordance with the program. Gun sight 83 moves in the screen in accordance with inputs from the user through an operating portion.

FIG. 19(a) shows an initial state; (b) shows an image displayed when the user aligns gun sight 83 on one of targets 82 and pulls the trigger, and the target is hit; and it is arranged such that exploded target 84 is displayed in a different form.

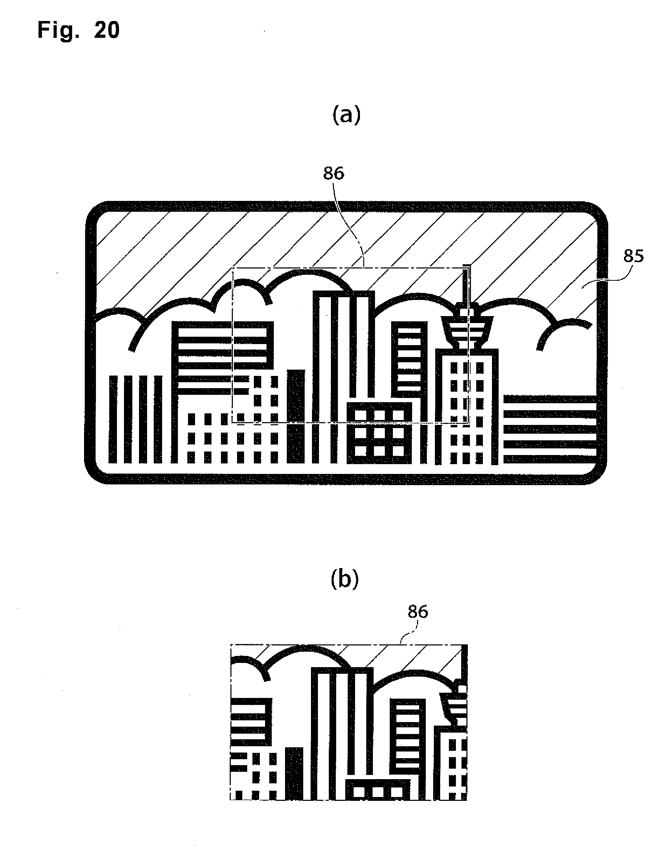

FIG 20 shows an example of a method of displaying a high-definition image. In the simulation device is stored entire high-definition image information 85 having a wide region as shown in FIG. 20(a). And, portion 86 thereof is actually outputted to the two-dimensional image forming devices and is projected as an image, as shown in FIG. 20(b).

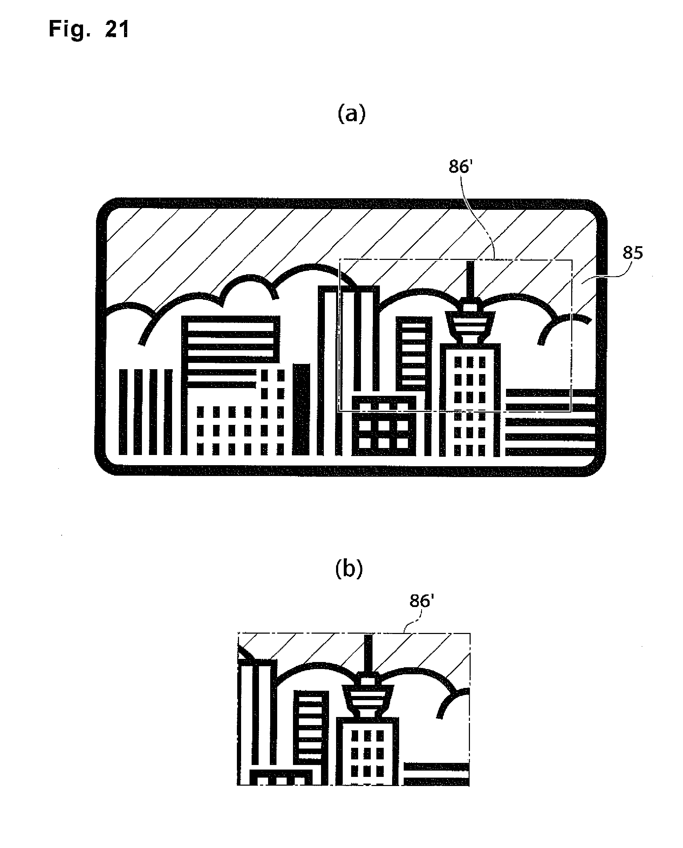

In FIG. 21, of entire high-definition image information 85 shown in (a), portion 86', which is different from the portion shown in FIG. 20, is actually outputted to the two-dimensional image forming devices and is projected as an image, as shown in FIG. 21(b).

What portion of the large entire high-definition image information 85 is cut out and displayed in this way is determined by the direction of the user's head. More specifically, as shown in FIGS. 9-11, rotary encoders that detect the head's rotation angles around the x-, y-, and z- axes are provided; and in accordance with outputs from the rotary encoders, an image that is assumed to seen in the user's eye view center corresponding to the outputs is displayed in the center of the image display device. Thus, in response to the direction of the user's head, things that are to be seen in the actual eye view center are displayed in the eye view center; in contrast to in ordinary simulation devices, the user is not required to move his or her eyeballs to catch a target and thus can catch the target without feeling a sense of discomfort, which precludes VE sickness.

Typically, it may be arranged such that of, e.g., a 16:9 ratio high-definition image, a 4:3 ratio portion is initially zoomed and displayed, and then the displayed 4:3 ratio portion is changed, in response to the head movement of the user in the right or left direction, to another 4:3 ratio portion within the 16:9 ratio high-definition image.

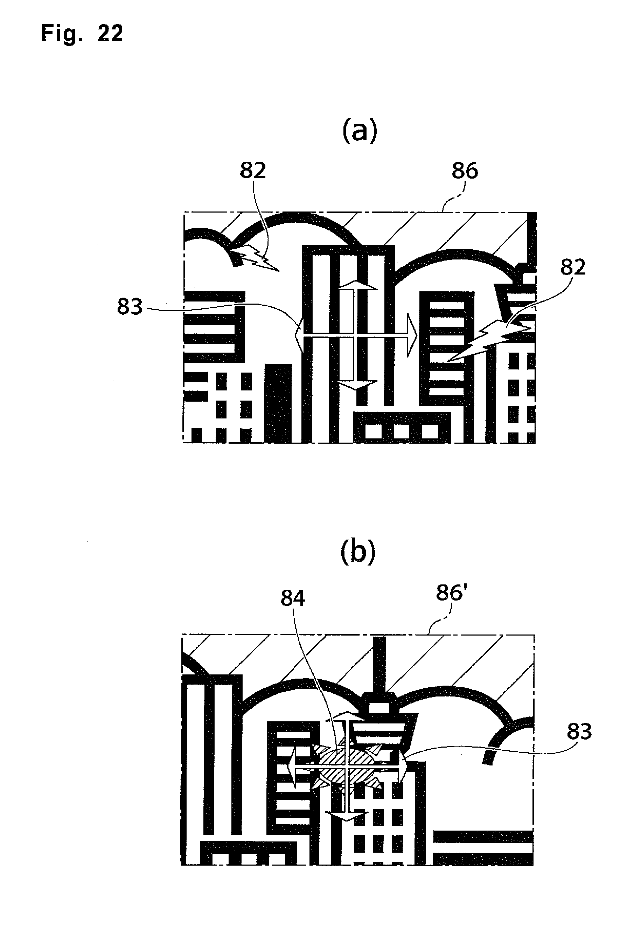

FIG 22 shows the situation in which the user turns his or her head, starting from the state in which his or her eye view center is directed to the center of the image as shown in FIG. 20 (i.e., as shown in FIG. 22(a), portion 86 of the image information is displayed), to the right direction so that, as shown in FIG. 22(b), portion 86' of the image information is displayed, aligns gun sight 83 on one of targets 82, pulls the trigger, hits the target; and it is arranged such that exploded target 84 is displayed in a different form.

Some of simulation devices are provided with such a for-somesthesia-purpose driving portion as described referring to FIGS. 14-17 and capable of somesthetically giving, in accordance images displayed, the user a sense of speed, a sense of posture, etc. In the case of driving such a for-somesthesia-purpose driving portion, it is difficult to control by a computer high-definition images to be displayed because the data to be processed are too big. In this embodiment, high-definition images that are not controlled by a computer are utilized, and thus it is configured such that when display the high-definition images, the for-somesthesia-purpose driving portion is driven with a sequence incorporated beforehand in accordance with the high-definition images, in synchronization with the projection of the high-definition image.

In the case of displaying the images formed by a computer, because the images often changes depending upon the information inputted by the user through the operating portion, the for-somesthesia-purpose driving portion is driven in synchronization with the images displayed. For example, in the case where a device that produces vibration is provided in the place where the user is, it is configured such that when a target is hit and exploded, as described above, the user is given vibrations to enhance the sense of reality (of course, with the explosive sound being conveyed to the user through acoustic effects). Further, in the case of simulating, e.g., hang gliding, the image display is changed and, at the same time, the user's posture is changed, as described above, in accordance with the inputs from the operation portion.

While, in the above description, the input means at the operation portion is assumed to be a gunlock, the present invention is not, of course, limited to that, and a method in which inputting is performed by striking something, e.g., a drum, by hand and a virtual reality method in which the movement of hands is separately observed by a CCD, a computer image corresponding thereto is displayed, and the user scores through pseudo-contact with the computer output image may also be used.

Further, it may also be configured such that in normal conditions, the for-somesthesia-purpose driving portion is driven by a sequence control in synchronization with the high-definition images, and when an input from the operation portion is received, the for-somesthesia-purpose driving portion is controlled by an interrupt control in accordance with the input.

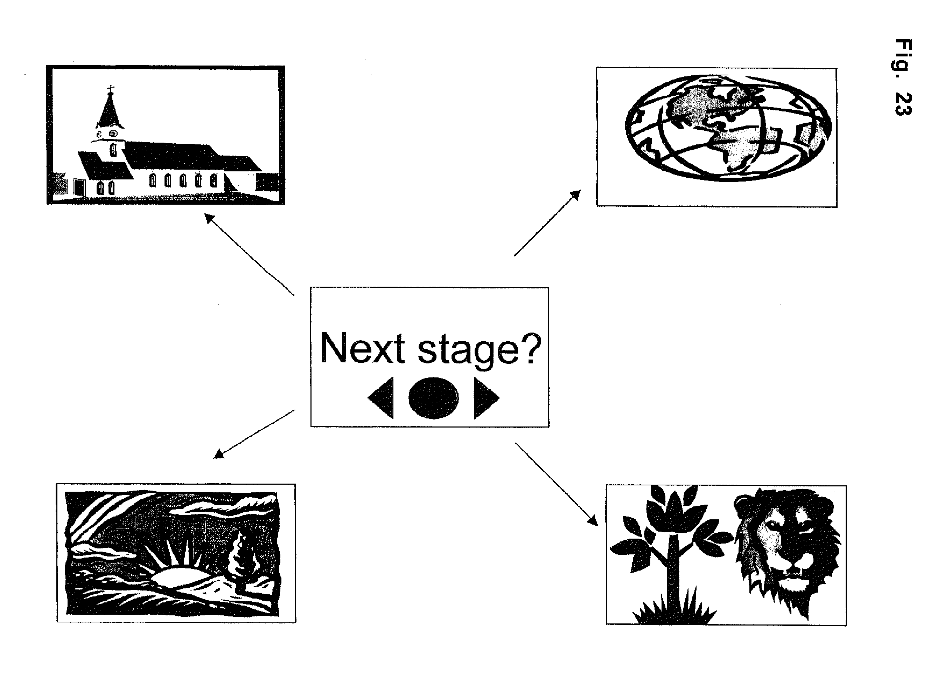

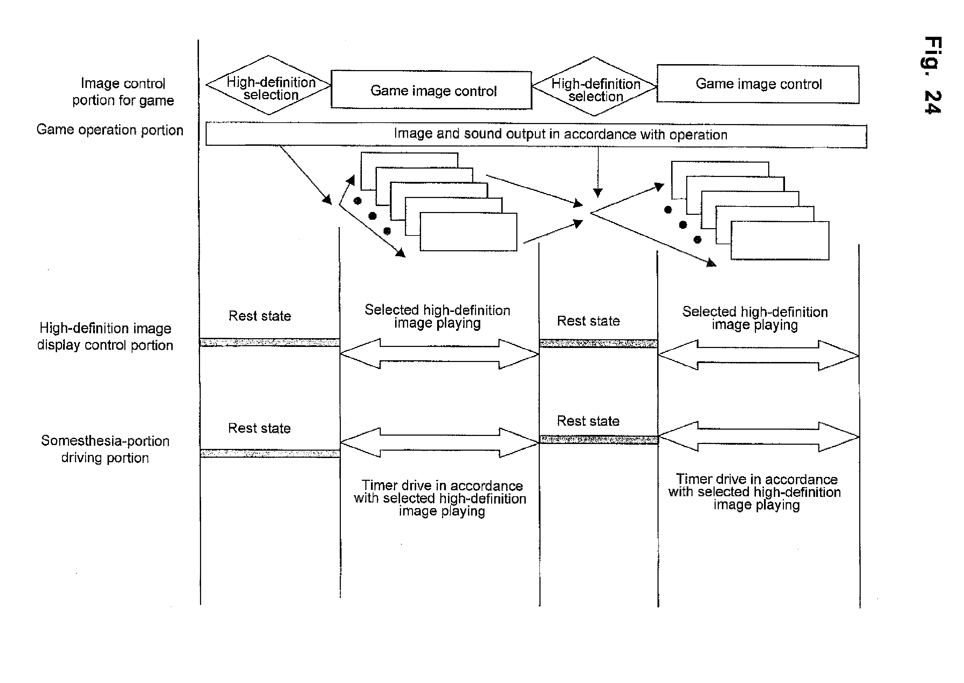

FIG. 23 shows a method that with a high-definition image being made a short one of about one minute, makes a user having obtained a high shooting-down score through a game select a next stage. In accordance with a scenery selected by the user, the next stage will be initiated. This sequence will be described referring to FIG. 24.

In FIG. 24, there are a game-purpose image control portion and a game operation portion; at the time the user initiates the game, the displayed image is set to be a computer output image. Here, a high-definition (HV) image is selected in response to an input by the user through an operation panel, but during this process, a high-definition image display control portion and the somesthesia-portion driving portion are in wait state (rest state). At the time of having the user select a predetermined high-definition image, an output image pattern, corresponding to the high-definition image, of the game-purpose image control portion is selected; and upon initiation of the game, the high-definition image display control portion and the somesthesia-portion driving portion are independently controlled by a timer control as if they were correlated with each other. Also, upon initiation of the game, the game-purpose image control portion successively displays computer output images based on information inputted through the game operation portion. And, it is configured such that upon completion of the timer drive, the high-definition image display control portion and the somesthesia-portion driving portion again come to be in wait state (rest state); it is decided, depending upon the results, e.g., the score obtained by the user, whether to have the user proceed to a next stage; and in the case of having the user proceed to a next stage, next stage high-definition images from which the user selects are presented to the user, and a similar sequences is repeated.

It should be noted that there are cases in which even when a high-definition images is used, the poorness of the image of the high-definition image becomes noticeable relative to the liquid crystal devices in the case of, as in the present invention, displaying the high-definition as a wide range image of 22.5 degrees or more. To address this problem, it is also preferable that, in the embodiments of the present invention, a measure is also taken in which relative to the image within a field of view angle of $\pm 15$ degrees to which the sight line is attracted, by applying an interpolation thereto through an image processing, the digital-like image is smoothed out. By this, with the interpolation processing being partly performed, an effect that a high-speed display is achieved can also be obtained.

As described above, by ingeniously combining the game score and the high-definition image selection, multiple, not a single, variations can be realized, and thus an amusement device that does not bore the user can be provided.

**Claims**

1. An image display device that with it being supported by a portion other than a user, is in contact with the face of the user and is movable in accordance with the movement of the face of the user, said image display device being **characterized in that** the gravity center of said image display device is, when it is worn by the user, located on the nearer side of the occipital region compared with the eyeballs and on the nearer side of the neck compared with the eyeballs.

2. An image display device according to claim 1, **characterized in that** the gravity center of said image display device substantially coincides with the average, 3-axes' rotational movement center of the neck of a human who is supposed to use said image display device.

3. An image display device that with it, by a portion other than a user, being supported so that said image display device is movable in the three-dimensional directions in space and being supported so that said image display device is rotationally movable in the three-dimensional directions, is in contact with the face of the user and is movable and rotationally movable in accordance with the movement of the face of the user, said image display device being **characterized in that** it has a plurality of rotational movement shafts of said image display device and **in that** each of the rotational movement shafts passes through the vicinity of the gravity center of said image display device.

4. An image display device according to claim 1 that with it, by a portion other than a user, being supported so that said image display device is movable in the three-dimensional directions in space and being supported so that said image display device is rotationally movable in the three-dimensional directions, is in contact with the face of the user and is movable and rotationally movable in accordance with the movement of the face of the user, said image display device being **characterized in that** each of the rotational movement shafts of said image display device passes through the vicinity of the gravity center of said image display device.

5. An image display device according to claim 3 or 4, **characterized in that** to each of said rotational movement shafts is set a rotational movement amount measuring sensor and **in that** said image display device has a computing device that determines the output image of said image display device in accordance with the outputs from said rotational movement amount measuring sensors.

6. An image display device according to claim 1 or 3, **characterized in that** said image display device is connected by a string-like flexible member with a counterweight and **in that** by suspending, via a pulley set on a two-dimensional-direction driving mechanism movable on a horizontal flat surface supported by the floor, said image display device and counterweight, said string-like flexible member supports said image display device.

7. An image display device according to claim 1 or 3, **characterized in that** said image display device is, via sandwiching means for sandwiching the face from the right and left side face directions that function also as earphones, in contact with the face of the user and **in that** the positional relationship between the face and said image display device is substantially fixed by said sandwiching means.

8. An image display device according to claim 1 or 3, **characterized in that** said image display device has a function of projecting and imaging, via a relay optical system, a light emitted from a two-dimensional type image forming device onto the retinas in the right and left eyeballs, with the imaged image being a wide range image having a field of view angle of $\pm22.5$ degrees or more.

9. An image display device according to claim 1 or 3, **characterized in that** said image display device has a two-dimensional type image forming device, first (for the right eye use) and second (for the left eye use) light diffusing bodies, first (for the right eye use) and second (for the left eye use) relay optical systems that respectively relay a light emitted from said two-dimensional type image forming device to the first (for the right eye use) and second (for the left eye use) light diffusing bodies, and first (for the right eye use) and second (for the left eye use) eyepiece optical systems that respectively project and image the transmitted images of said first and second diffusing bodies onto each of the retinas in the right and left eyeballs.

10. An image display device according to claim 9, **characterized in that** said image display device has an adjusting mechanism that adjusts the distance between the optical centers of said first and second eyepiece optical systems and the distance between the first transmitted image and the second transmitted image having transmitted through said light diffusing bodies so that those distances become equal to the eye-width of the user.

11. An image display device according to claim 9, **characterized in that** said light diffusing bodies, which diffuse light, are each a transmission type diffusing plate constituted by a transmission plate on which abrasive grains of a metal oxide or metallic carbide of which grain diameter is precisely controlled with micron-grade are coated.

12. An image display device according to claim 11, **characterized in that** said abrasive grains are made of at least one of silicon carbide, chromium oxide, tin oxide, titanium oxide, magnesium oxide, and aluminum oxide and **in that** said transmission plate is a polyester film.

13. An image display device according to claim 8, **characterized in that** said two-dimensional type image forming device has three pieces of two-dimensional transmission type or reflection type liquid crystal device elements, each corresponding to each of the colors of green (G), blue (B), and red (R), which are perpendicular to the light beam emitting direction, an illumination device that illuminates said liquid crystal device elements, and an image combining device that combines the lights emitted from said liquid crystal device elements into a single image.

14. An image display device according to claim 9, **characterized in that** said two-dimensional type image forming device has three pieces of two-dimensional transmission type or reflection type liquid crystal device elements, each corresponding to each of the colors of green (G), blue (B), and red (R), which are perpendicular to the light beam emitting direction, an illumination device that illuminates said liquid crystal device elements, and an image combining device that combines the lights emitted from said liquid crystal device elements into a single image.

15. An image display device according to claim 9, **characterized in that** with respect to each of said first and second eyepiece optical systems, at least one surface of the lenses constituting is made to be a conic surface with conic constant K<0 and **in that** each of said eyepiece optical systems has at least two cemented lenses.

16. A simulation device that uses the image display devices according to claim 1 or 3, **characterized in that** said simulation device has a for-somesthesia-purpose driving portion that in accordance with an image displayed on said image display device, gives a for-somesthesia-purpose stimulus other than an acoustic stimulus to a user or controls the posture of the user.

17. A simulation device, which uses the image display device, according to claim 16, **characterized in that** said for-somesthesia-purpose driving portion has an air blowing mechanism that blows air from ahead of said image display device and **in that** said air blowing mechanism has a function of varying the air blowing amount in accordance with the virtual movement speed somesthetically felt through the image displayed on said image display device.

18. A simulation device according to claim 17, **characterized in that** said air blowing mechanism has a control mechanism that controls the air blowing temperature.

19. A simulation device according to claim 17, said air blowing mechanism has a control mechanism that controls the fragrance during the air blowing.

**20.** A simulation device, which uses the image display device, according to claim 16, **characterized in that** said simulation device has operating means by which the user controls with his or her hand or foot the virtual movement speed somesthetically felt through the image displayed on said image display device.

**21.** A simulation device according to claim 20, **characterized in that** said operating means is provided with an emergency switch.

**22.** A simulation device, which uses the image display device, according to claim 16, **characterized in that** said for-somesthesia-purpose driving portion has a control device that inclines a portion supporting the user in accordance with the user's body inclination somesthetically felt through the image displayed on said image display device.

**23.** A simulation device according to claim 22, **characterized in that** said portion supporting the user supports the user in a state of standing or walking.

**24.** A simulation device according to claim 22, **characterized in that** said portion supporting the user supports the user in a state of sitting or in a state of sitting and rowing with feet.

**25.** A simulation device according to claim 22, **characterized in that** said portion supporting the user supports the user in a state that the user is lying and a portion of the user's body is suspended upwardly or in a state that the user's entire body is supported by the user's portion other than feet and buttocks.

**26.** A simulation device according to claim 16, wherein either one of a high-definition image or an image formed by a computer is selected and displayed on said image display device, said simulation device being **characterized in that** it has a function that when the high-definition image is displayed, said for-somesthesia-purpose driving portion is controlled with a sequence predetermined in accordance with the display of the high-definition display and that when the image formed by the computer is displayed, the image is formed by the computer and said for-somesthesia-purpose driving portion is controlled, in response to input information inputted by the user through an operating portion.

**27.** A simulation device according to claim 16, wherein a high-definition image and an image formed by a computer are combined and displayed on said image display device, said for-somesthesia-purpose control portion being **characterized in that** it has a function of controlling with a sequence predetermined in accordance with the display of the high-definition display said for-somesthesia-purpose driving portion and of, on the other hand, forming by the computer an image in response to input information inputted by the user through an operating portion.

**28.** A simulation device according to claim 26, **characterized in that** said simulation device has a first two-dimensional image forming device that forms a high-definition image and a second two-dimensional image forming device that forms an image formed by a computer and has means that combines optically or electrically the image of said first two-dimensional image forming device and the image of said second two-dimensional image forming device.

**29.** A simulation device according to claim 28, **characterized in that** said simulation device has high-definition image information having a wider region than the high-definition image information displayable with said first two-dimensional image forming device and has a function of having, in accordance with the outputs of a detecting device that detects the direction of the user's face when the user wears said image display device, a portion of said high-definition image information having a wider region formed on said first two-dimensional image forming device.

**Fig. 1**

## Fig. 2

## Fig. 3A

Look-around eye 0°

FIELD
POSITION

0.00, 1.00
0.000,60.00DG

0.00, 0.33
0.000,30.00DG

0.00, 0.00
0.000,0.000DG

0.00, -0.33
0.000,-30.00DG

0.00, -1.00
0.000,-60.00DG

.458 MM

DEFOCUSING 0.00000

# Fig. 3B

## Look-around eye 5°

FIELD
POSITION

0.00, 1.00
0.000,60.00DG

0.50, 0.33
0.000,30.00DG

0.00, 0.00
0.000,0.000DG

0.00, -0.33
0.000,-30.00DG

0.00, -1.00
0.000,-60.00DG

.431 MM

DEFOCUSING

0.00000

## Fig. 3C

Look-around eye 10°

FIELD POSITION

0.00, 1.00
0.000,60.00DG

0.50, 0.33
0.000,30.00DG

0.00, 0.00
0.000,0.000DG

0.00, -0.33
0.000,-30.00DG

0.00, -1.00
0.000,-60.00DG

.425 MM

DEFOCUSING                0.00000

## Fig. 3D

Look-around eye 15°

FIELD
POSITION

0.00, 1.00
0.000,60.00DG

0.50, 0.33
0.000,30.00DG

0.00, 0.00
0.000,0.000DG

0.00, -0.33
0.000,-30.00DG

0.00, -0.58
0.000,-45.00DG

.354  MM

DEFOCUSING                    0.00000

Fig. 4

Fig. 5A

DEFOCUSING -0.50000

EP 1 694 063 A1

## Fig. 5B

## Fig. 5C

FIELD
POSITION

1.00, 1.00
0.000,0.000DG

0.50, 0.50
0.000,0.000DG

0.00, 0.00
0.000,0.000DG

-0.50, -0.50
0.000,0.000DG

-1.00, -1.00
0.000,0.000DG

.500E-01  MM

DEFOCUSING                 0.00000

Fig. 6

## Fig. 7A

(a)

(b)

## Fig. 7B

## Fig. 7C

# Fig. 7D

Fig. 8

**Fig. 9**

(a)

(a)

# Fig. 10

## (a)

## (a)

# Fig. 11

Fig. 12

## Fig. 13

## Fig. 14

Fig. 15

## Fig. 16

**Fig. 17**

## Fig. 18

## Fig. 19

(a)

(b)

**Fig. 20**

(a)

(b)

# Fig. 21

(a)

(b)

**Fig. 22**

(a)

(b)

**Fig. 23**

Fig. 24

Image control portion for game: High-definition selection → Game image control → High-definition selection → Game image control

Game operation portion: Image and sound output in accordance with operation

High-definition image display control portion: Rest state | Selected high-definition image playing | Rest state | Selected high-definition image playing

Somesthesia-portion driving portion: Rest state | Rest state

Timer drive in accordance with selected high-definition image playing

Timer drive in accordance with selected high-definition image playing

EP 1 694 063 A1

**Fig. 25**

## Fig. 26A

## Fig. 26B

## Fig. 26C

## Fig. 26D

Fig. 27A

Left eye side

L101  L102  L103

G

+60°

0°

65mm

−60°

H

Right eye side

## Fig. 27B

# Fig. 27C

(a)
1.00 RELATIVE FIELD HEIGHT (15.00)°

(b)
0.00 RELATIVE FIELD HEIGHT (0.000)°

(c)
-1.00 RELATIVE FIELD HEIGHT (-15.0)°

656.3000NM
587.6000NM
486.1000NM

## Fig. 27D

| | 656.3000NM |
|---|---|
| | 587.6000NM |
| | 486.1000NM |

**(a)**

1.00 RELATIVE
FIELD HEIGHT
(30.00)°

Y-FAN
(mm)
0.1
-0.1

X-FAN
(mm)
0.1
-0.1

**(b)**

0.72 RELATIVE
FIELD HEIGHT
(22.50)°

Y-FAN
(mm)
0.1
-0.1

X-FAN
(mm)
0.1
-0.1

**(c)**

0.46 RELATIVE
FIELD HEIGHT
(15.00)°

Y-FAN
(mm)
0.1
-0.1

X-FAN
(mm)
0.1
-0.1

**(d)**

0.23 RELATIVE
FIELD HEIGHT
(7.50)°

Y-FAN
(mm)
0.1
-0.1

X-FAN
(mm)
0.1
-0.1

**(e)**

0.00 RELATIVE
FIELD HEIGHT
(0.000)°

Y-FAN
(mm)
0.1
-0.1

X-FAN
(mm)
0.1
-0.1

Fig. 28A

## Fig. 28B

# Fig. 28C

## (a)

1.00 RELATIVE
FIELD HEIGHT
(15.00)°

| | 656.3000NM |
| | 587.6000NM |
| | 486.1000NM |

Y-FAN
(mm)

X-FAN
(mm)

## (b)

0.00 RELATIVE
FIELD HEIGHT
(0.000)°

Y-FAN
(mm)

X-FAN
(mm)

## (c)

-1.00 RELATIVE
FIELD HEIGHT
(-15.0)°

Y-FAN
(mm)

X-FAN
(mm)

## INTERNATIONAL SEARCH REPORT

| International application No. |
|---|
| PCT/JP2004/015757 |

A. CLASSIFICATION OF SUBJECT MATTER
Int.Cl$^7$ H04N5/64, G02B27/02, A63F13/08, G09B9/00

According to International Patent Classification (IPC) or to both national classification and IPC

B. FIELDS SEARCHED

Minimum documentation searched (classification system followed by classification symbols)
Int.Cl$^7$ H04N5/64, G02B27/02, A63F13/08, G09B9/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-331730 A (Sony Corp.),<br>30 November, 1999 (30.11.99),<br>Par Nos. [0024] to [0025]; Fig. 4<br>(Family: none) | 1-29 |
| A | JP 6-195440 A (Olympus Optical Co., Ltd.),<br>15 July, 1994 (15.07.94),<br>Par Nos. [0004], [0010] to [0011]; Figs. 1, 14<br>(Family: none) | 1-29 |
| A | JP 8-086975 A (Olympus Optical Co., Ltd.),<br>02 April, 1996 (02.04.96),<br>Par No. [0029]; Fig. 1<br>(Family: none) | 1-29 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 24 January, 2005 (24.01.05) | 08 February, 2005 (08.02.05) |

| Name and mailing address of the ISA/<br>Japanese Patent Office | Authorized officer |
|---|---|
| Facsimile No. | Telephone No. |

Form PCT/ISA/210 (second sheet) (January 2004)

68

**INTERNATIONAL SEARCH REPORT**

International application No.

PCT/JP2004/015757

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-197825 A (Sharp Corp.), 31 July, 1998 (31.07.98), Par Nos. [0003], [0007] to [0017]; Figs. 1, 2, 5, 6 (Family: none) | 1-29 |

Form PCT/ISA/210 (continuation of second sheet) (January 2004)